# EUROPEAN PATENT APPLICATION

(11) **EP 4 610 783 A1**
(43) Date of publication of application: **03.09.2025**
(21) Application number: 23882503.8
(22) Date of filing: 18.10.2023
(51) Int. Cl.: G06F 3/01

(54) **INFORMATION PROCESSING DEVICE, INFORMATION PROCESSING METHOD, AND INPUT DEVICE**

(30) Priority: 24.10.2022 US 202263418790 P
(71) Applicant: Sony Group Corporation, Tokyo 108-0075 (JP)
(72) Inventor: ISHIKAWA, Yuri, Tokyo 108-0075 (JP); YONEDA, Masafumi, Tokyo 108-0075 (JP); FUKUMA, Yohei, Tokyo 108-0075 (JP); ISHIKAWA, Tsuyoshi, Tokyo 108-0075 (JP); YUASA, Hiroshi, Tokyo 108-0075 (JP); YAMANO, Ikuo, Tokyo 108-0075 (JP); NAKAGAWA, Yusuke, Tokyo 108-0075 (JP)
(74) Representative: D Young & Co LLP
(86) International application number: PCT/JP2023/037648
(87) International publication number: WO 2024/090298

(57) **Abstract**

The present technology relates to an information processing apparatus, an information processing method, and an input device capable of presenting a contact situation between virtual objects in a Cross Reality (XR) space to a user.

An information processing apparatus includes a recognition unit that recognizes a state of each of virtual objects in an XR space, a space control section that calculates a contact situation between the virtual objects in the XR space on the basis of the state of each virtual object and design data regarding each virtual object, and a presentation control unit that controls presentation of contact situation feedback representing the contact situation between the virtual objects. The present technology can be applied to, for example, an XR system.

## Description

### TECHNICAL FIELD

The present technology relates to an information processing apparatus, an information processing method, and an input device, and more particularly relates to an information processing apparatus, an information processing method, and an input device suitable for use in cross reality (XR).

### BACKGROUND ART

It has been conventionally proposed to visually, aurally, and tactilely indicate a collision of objects in a virtual space (see, for example, Patent Document 1).

### CITATION LIST

### PATENT DOCUMENT

Patent Document 1: Japanese Patent Application Laid-Open No. 08-2414737

### SUMMARY OF THE INVENTION

### PROBLEMS TO BE SOLVED BY THE INVENTION

In the invention described in Patent Document 1, however, how to specifically present a collision of objects is not examined.

The present technology has been made in view of such circumstances, and enables presentation of a contact situation between virtual objects in an XR space to a user.

### SOLUTIONS TO PROBLEMS

An information processing apparatus according to a first aspect of the present technology includes a recognition unit that recognizes a state of each of virtual objects in an XR space, a space control section that calculates a contact situation between the virtual objects in the XR space on the basis of the state of each virtual object and design data regarding each virtual object, and a presentation control unit that controls presentation of contact situation feedback representing the contact situation between the virtual objects.

An information processing method according to the first aspect of the present technology includes recognizing a state of each of virtual objects in an XR space, calculating a contact situation between the virtual objects in the XR space on the basis of the state of each virtual object and design data regarding each virtual object, and controlling presentation of contact situation feedback representing the contact situation between the virtual objects.

An input device according to a second aspect of the present technology includes an operation portion used to operate an XR space and a tactile device that presents tactile feedback representing a contact situation between virtual objects in the XR space through tactile situation.

In the first aspect of the present technology, a state of each of virtual objects in an XR space is recognized, a contact situation between the virtual objects in the XR space is calculated on the basis of the state of each virtual object and design data regarding each virtual object, and presentation of contact situation feedback representing the contact situation between the virtual objects is controlled.

In the first aspect of the present technology, tactile feedback representing a contact situation between virtual objects in an XR space is presented through tactile situation.

### BRIEF DESCRIPTION OF DRAWINGS

Fig. 1 is a diagram illustrating an embodiment of an XR system to which the present technology is applied.
Fig. 2 is diagrams illustrating display examples of the XR system.
Fig. 3 is a diagram illustrating another display example of the XR system.
Fig. 4 is a block diagram illustrating a configuration example of an information processing apparatus and a terminal apparatus.
Fig. 5 is external views illustrating a configuration example of a controller device.
Fig. 6 is diagrams illustrating methods for holding the controller device.
Fig. 7 is diagrams illustrating other methods for holding the controller device.
Fig. 8 is a diagram illustrating another method for holding the controller device.
Fig. 9 is diagrams illustrating an arrangement example of operation members of the controller device.
Fig. 10 is diagrams illustrating arrangement examples of markers of the controller device.
Fig. 11 is diagrams illustrating examples of how the markers of the controller device look.
Fig. 12 is diagrams for explaining a method of recognizing a position and an attitude of the controller device.
Fig. 13 is a diagram illustrating an example of an internal configuration of the controller device.
Fig. 14 is a diagram illustrating an arrangement example of tactile devices of the controller device.
Fig. 15 is a flowchart for explaining a process for controlling the operation members performed by the XR system.
Fig. 16 is a diagram for explaining the process for controlling the operation members performed by the XR system.
Fig. 17 is diagrams illustrating examples of a method for holding the controller device.
Fig. 18 is diagrams illustrating other examples of the method for holding the controller device.
Fig. 19 is a diagram illustrating another example of the method for holding the controller device.
Fig. 20 is a flowchart for explaining a process for controlling tactile feedback performed by the XR system.
Fig. 21 is diagrams for explaining examples of tactile feedback.
Fig. 22 is diagrams for explaining other examples of the tactile feedback.
Fig. 23 is a diagram for explaining another example of the tactile feedback.
Fig. 24 is a flowchart for explaining a first embodiment of a process for controlling contact situation feedback performed by the XR system.
Fig. 25 is diagrams illustrating examples of contact situation feedback in a case where an operation target component is fitted to another component.
Fig. 26 is diagrams illustrating examples of contact situation feedback in a case where an operation target component is pushed into another component.
Fig. 27 is diagrams illustrating examples of contact situation feedback in a case where an operation target component is brought close to another component.
Fig. 28 is diagrams illustrating other examples of the contact situation feedback in the case where the operation target component is brought close to the another component.
Fig. 29 is diagrams illustrating examples of contact situation feedback in a case where an operation target component is screwed to another component.
Fig. 30 is diagrams illustrating examples of contact situation feedback in a case where an operation target component is screwed to another component using the controller device.
Fig. 31 is diagrams illustrating an example of contact situation feedback in a case where an operation target component is in contact with another component and cannot be incorporated.
Fig. 32 is a flowchart for explaining a second embodiment of the process for controlling contact situation feedback performed by the XR system.
Fig. 33 is diagrams illustrating an example of a solution in a case where an operation target component is incorporated into another component.
Fig. 34 is diagrams illustrating an example of a solution in a case where an operation target component is inserted into another component.
Fig. 35 is diagrams illustrating an example of a solution in a case where an operation target component is inserted into another component.
Fig. 36 is a diagram illustrating an example of a solution in a case where an operation target component and another component interfere with each other.
Fig. 37 is diagrams illustrating an example of proposal of replacement of a component.
Fig. 38 is diagrams illustrating an example of presentation of a direction in which, or a position at which, an operation target component can be inserted into another component without interfering with the another components.
Fig. 39 is diagrams illustrating an example of a method for presenting a solution.
Fig. 40 is diagrams illustrating an example in which a point of view is moved or proposed in order to check a contact portion between components.
Fig. 41 is diagrams illustrating an example in which a contact portion between components is made easy to see.
Fig. 42 is a flowchart for explaining a process for learning design data performed by the XR system.
Fig. 43 is a diagram for explaining a process for learning a preference for a solution.
Fig. 44 is a block diagram illustrating a configuration example of a computer.

### MODE FOR CARRYING OUT THE INVENTION

Modes for carrying out the present technology will be described hereinafter. The description will be given in the following order.
1. Embodiment
2. Application Examples
3. Modifications
4. Others

### <<1. Embodiment>>

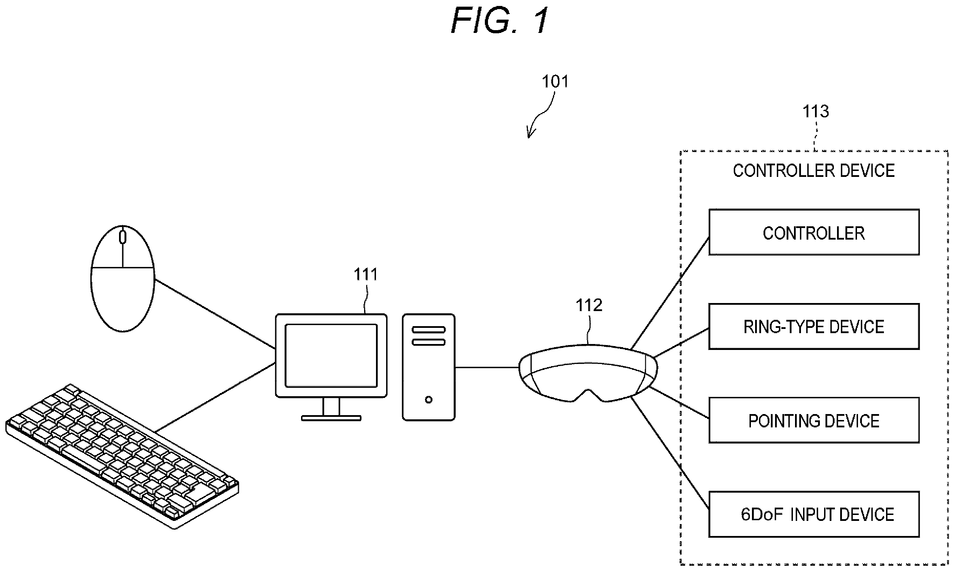

An embodiment of the present technology will be described with reference to Figs. 1 to 23.

### <Configuration Example of XR System 101>

Fig. 1 illustrates a configuration example of a cross reality (XR) system 101, which is an embodiment of an information processing system to which the present technology is applied.

The XR system 101 is a system that realizes XR, which is a technology of fusing a real world and a virtual world and includes virtual reality (VR), augmented reality (AR), mixed reality (MR), and substitutional reality (SR). The XR system 101 is a system that presents, to a user, a space (hereinafter referred to as an XR space) obtained by fusing a real space and a virtual space. For example, the XR system 101 can present an unreal virtual object (hereinafter referred to as a virtual object), such as a model (hereinafter referred to as a CAD model) created by computer aided design (CAD), to the user as if the virtual object were present on the spot.

The XR system 101 includes an information processing apparatus 111, a terminal apparatus 112, and a controller device 113.

The information processing apparatus 111 and the terminal apparatus 112 can communicate with each other wirelessly or by wire, and transmit and receive data to and from each other. The terminal apparatus 112 and the controller device 113 can communicate with each other wirelessly or by wire, and transmit and receive data to and from each other. The information processing apparatus 111 and the controller device 113 communicate with each other via the terminal apparatus 112, and transmit and receive data to and from each other.

For example, the information processing apparatus 111 can independently receive operations by the user and present various types of information such as visual information and auditory information to the user.

Furthermore, the information processing apparatus 111 controls the terminal apparatus 112 and controls presentation of an XR space to the user by the terminal apparatus 112, for example, by executing a predetermined application (hereinafter referred to as an XR app). For example, the information processing apparatus 111 executes the XR app to control output of various types of information such as visual information and auditory information in the terminal apparatus 112 and construct an XR space presented by the terminal apparatus 112.

Fig. 1 illustrates an example in which the information processing apparatus 111 includes a personal computer (PC) including an operation input unit including a mouse and a keyboard. For example, the information processing apparatus 111 may include another information processing apparatus such as a smartphone or a tablet terminal. For example, the information processing apparatus 111 may include a plurality of information processing apparatuses. For example, the information processing apparatus 111 may include a system constructed by cloud computing over a network.

The terminal apparatus 112 is an apparatus that presents an XR space to the user.

Fig. 1 illustrates an example in which the terminal apparatus 112 is a head mounted display apparatus that can be mounted on the user's head and includes a head mounted display (HMD) that is an apparatus that presents an XR space to the user. More specifically, Fig. 1 illustrates an example in which the terminal apparatus 112 is a non-transmissive HMD that covers the user's field of view.

For example, the terminal apparatus 112 includes a video see-through HMD having an imaging function of capturing an image of a real space on the basis of the user's point of view and capable of presenting, to the user, a composite image obtained by combining together a real image obtained by capturing an image of a real space and an image of a virtual space (hereinafter referred to as a virtual image) such as computer graphics (CG).

For example, the terminal apparatus 112 includes left and right imaging units respectively corresponding to the user's left and right eyes and left and right display units respectively corresponding to the user's left and right eyes.

For example, the left and right imaging units constitute a stereo camera, and capture images in a line-of-sight direction of the user (hereinafter referred to as visual field images) from a plurality of points of view corresponding to the user's left and right eyes. That is, the left and right imaging units capture images of objects (hereinafter referred to as real objects) in a real space viewed from the user's points of view.

The left and right display units can display different images for the left and right eyes, respectively, and can present a three-dimensional virtual object by displaying images with parallax for the left and right eyes. For example, the left and right display units display left and right visual field images captured by the left and right imaging units, respectively.

Note that the terminal apparatus 112 may include, for example, another terminal apparatus for XR, such as a smartphone or the like set in, for example, AR glasses or goggles for use. Furthermore, for example, a display apparatus such as a spatial reproduction display may be used instead of the terminal apparatus 112.

The controller device 113 is used for operations and inputs (hereinafter referred to as operation inputs) to an XR space presented to the user by the terminal apparatus 112. For example, the user can perform, using the controller device 113, various operations on virtual objects displayed on the terminal apparatus 112.

For example, the controller device 113 detects at least one of an operation input by the user or behavior of the user (for example, a gesture) using at least one of operation members, such as buttons, or a sensor. The controller device 113 transmits a signal (hereinafter referred to as a controller signal) including at least one of an operation input signal indicating an operation input by the user or a behavior signal indicating behavior of the user to the information processing apparatus 111 via the terminal apparatus 112.

Furthermore, for example, the controller device 113a includes a tactile device that presents a tactile stimulus such as vibration, and presents the tactile stimulus to the user under the control of the information processing apparatus 111 or the terminal apparatus 112.

The controller device 113 includes, for example, one or more types of input devices such as a controller, a ring-type input device, a pointing device, and a six-degree-of freedom (6DoF) input device.

The controller is, for example, an input device held by the user's hand. The controller may include, for example, operation members, such as buttons, operable by the user. For example, the user can perform a selection operation, a determination operation, a scroll operation, and the like on a virtual object displayed on the terminal apparatus 112 by pressing the buttons of the controller. Furthermore, the controller may include, for example, a touch sensor and a motion sensor.

Note that the controller is not limited to being held by the user's hand, and, for example, may be worn on one of the user's body parts including an elbow, an arm, a knee, an ankle, and a thigh.

The ring-type device is a ring-type input device worn on the user's finger. The ring-type device may include, for example, operation members, such as buttons, operable by the user. For example, the user can change a position and an attitude of a virtual object (for example, a three-dimensional model) in an XR space with six degrees of freedom (6DoF) by operating the ring-type device.

The pointing device is an input device capable of indicating any position in an XR space. For example, the 6DoF position and attitude of the pointing device are recognized by the information processing apparatus 111 via the terminal apparatus 112 by a tracking method such as a bright spot tracking method, a porcelain tracking method, or an ultrasonic tracking method.

The 6DoF input device is, for example, an input device capable of performing 6DoF operations.

For example, the user can perform an operation input using the controller device 113 while viewing various objects (display objects) displayed on the information processing apparatus 111 or the terminal apparatus 112.

Note that types and the number of the controller devices 113 are not particularly limited. For example, as the controller device 113, an input device other than the above-described types may be used, or an input device obtained by combining a plurality of types of input devices may be used, instead.

For example, the XR system 101 can be applied to various fields such as a manufacturing field and a medical field.

For example, the XR system 101 can perform product design support and assembly support in the manufacturing field. For example, in a product design stage, the user can freely edit a three-dimensional object, which is a virtual object, using the XR system 101, or can grasp a design result and a design in advance before trial production by comparing the virtual object with the real world.

For example, the XR system 101 can support surgery and education in the medical field. For example, using the XR system 101, the user can display a state in a patient's body on his/her body surface to grasp a surgical site or perform training in advance.

Note that, for example, in a case where the XR space is shared by a plurality of users, for example, the terminal apparatus 112 and the controller device 113 are provided for each user in the XR system 101.

### <Display Examples in XR System 101>

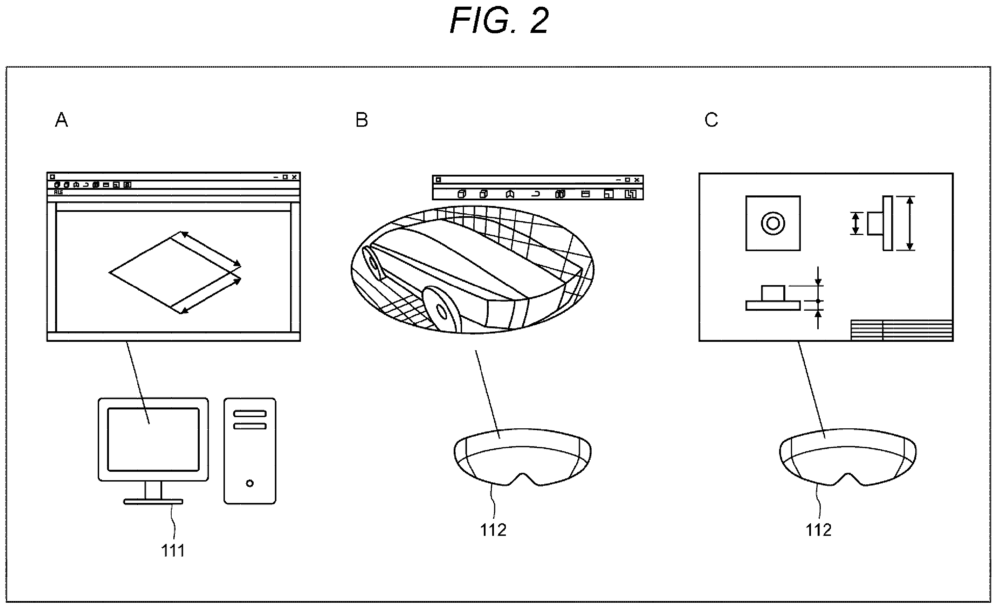

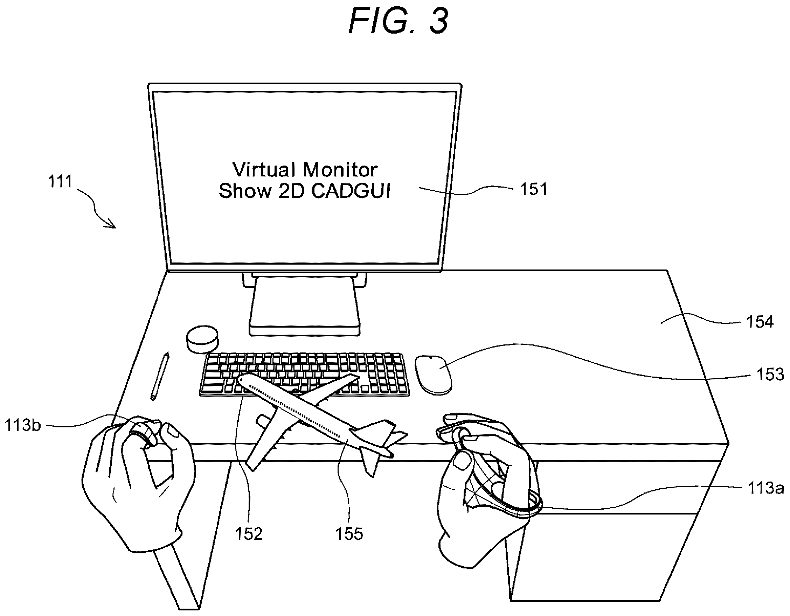

Here, display examples of a display object in the XR system 101 will be described with reference to Figs. 2 and 3.

Figs. 2 and 3 illustrate display examples of a display object in the XR system 101 in a case where a CAD model is created.

For example, as illustrated in A of Fig. 2, the information processing apparatus 111 displays a two-dimensional CAD model, and the user can edit the two-dimensional CAD model.

For example, as illustrated in B of Fig. 2, the terminal apparatus 112 displays a three-dimensional CAD model, and the user can edit the three-dimensional CAD model.

For example, as illustrated in C of Fig. 2, the terminal apparatus 112 displays a two-dimensional object such as a design drawing or a specification, and the user can check the design drawing, the specification, or the like.

Fig. 3 illustrates a display example of the XR space by the terminal apparatus 112.

A display 151, a keyboard 152, a mouse 153, and a desk 154 of the information processing apparatus 111 are displayed as video see-through based on a real image of a real space. A two-dimensional image by the terminal apparatus 112, on the other hand, is superimposed on the display 151 as a virtual monitor. For example, a two-dimensional CAD model to be designed is displayed on the virtual monitor. The two-dimensional CAD model displayed on the virtual monitor is preferably operated using the keyboard 152 and the mouse 153, for example, from the viewpoint of high accuracy of position detection and ease of position holding.

Furthermore, in this example, the terminal apparatus 112 displays, in front of the display 151, a three-dimensional CAD model 155 to be designed.

The CAD model 155 is operated by, for example, a controller device 113a held by the user's dominant hand (in this example, a right hand) and a controller device 113b, which is a ring-type device worn on an index finger of the user's non-dominant hand (in this example, a left hand) .

For example, the information processing apparatus 111 recognizes positions, attitudes, and behavior of the user's hand holding the controller device 113a and the user's hand wearing the controller device 113b by performing hand tracking on the basis of images captured by the imaging units included in the terminal apparatus 112. Furthermore, for example, the information processing apparatus 111 receives controller signals from the controller device 113a and the controller device 113b via the terminal apparatus 112, and recognizes operations performed by the controller device 113a and the controller device 113b on the CAD model 155 on the basis of the controller signals.

For example, the user can grasp, release, or move and rotate the CAD model 155 with 6DoF using the controller device 113a or the controller device 113b.

Note that, for example, in a case where the user moves his/her hand on which the controller device 113a or the controller device 113b is worn without grasping the CAD model 155, the CAD model 155 may remain still, or the CAD model 155 may move in such a way as to move a virtual point.

For example, the user can point at any point, line, surface, or the like of the CAD model 155 with a ray (virtual ray) or the like using the controller device 113a. For example, the user can perform line drawing, in which a line is drawn on the CAD model 155, using the controller device 113a.

For example, the user can edit (for example, model, wire, disassemble, etc.) the CAD model 155 using the controller device 113a or the controller device 113b.

### <Configuration Examples of Information Processing Apparatus 111 and Terminal Apparatus 112>

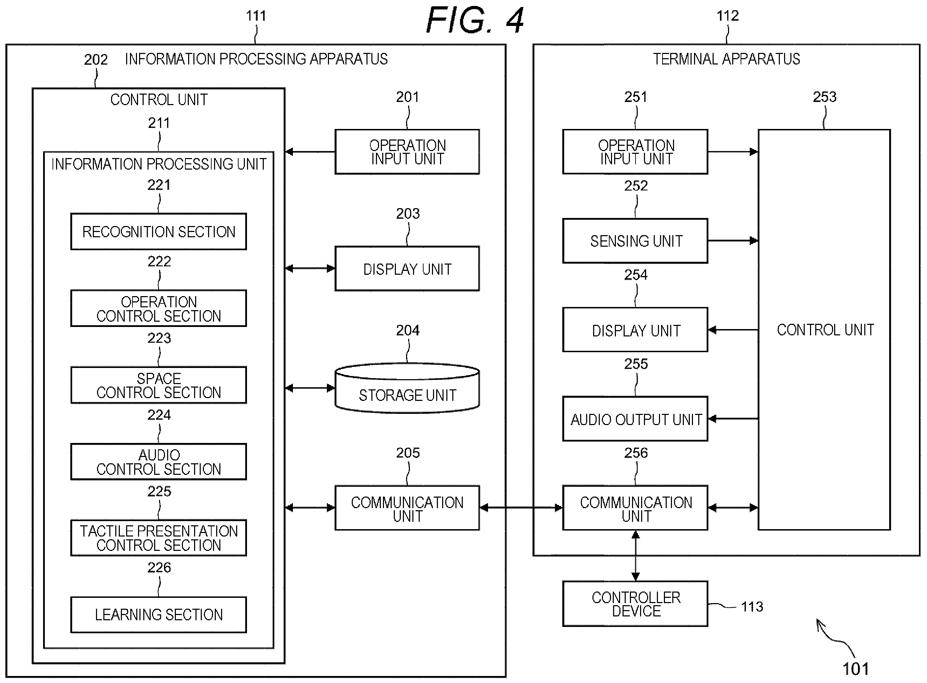

Fig. 4 is a block diagram illustrating configuration examples of functions of the information processing apparatus 111 and the terminal apparatus 112 of the XR system 101.

The information processing apparatus 111 includes an operation input unit 201, a control unit 202, a display unit 203, a storage unit 204, and a communication unit 205.

The operation input unit 201 includes, for example, input devices such as a keyboard and a mouse. The operation input unit 201 receives a user's operation input and supplies an operation input signal indicating content of the user's operation input to the control unit 202.

The control unit 202 includes, for example, an electronic circuit such as a CPU or a microprocessor. Furthermore, the control unit 202 may include a ROM that stores programs to be used, operation parameters, and the like, and a RAM that temporarily stores parameters and the like that change as appropriate.

For example, the control unit 202 functions as an arithmetic processing device and a control device, and controls overall operation of the information processing apparatus 111 and performs various processes in accordance with various programs.

For example, the control unit 202 achieves the information processing unit 211 by executing an XR app capable of editing user experience and virtual objects in the information processing apparatus 111 and the XR space. The information processing unit 211 includes a recognition section 221, an operation control section 222, a space control section 223, an audio control section 224, a tactile presentation control section 225, and a learning section 226. That is, the recognition section 221, the operation control section 222, the space control section 223, the audio control section 224, the tactile presentation control section 225, and the learning section 226 are achieved by executing the XR app using the control unit 202. Furthermore, input and output of each component of the information processing unit 211, that is, the recognition section 221, the operation control section 222, the space control section 223, the audio control section 224, the tactile presentation control section 225, and the learning section 226 are executed via the XR app.

The recognition section 221 recognizes a state of the information processing apparatus 111, a state of the terminal apparatus 112, a state of surroundings of the terminal apparatus 112, a state of the controller device 113, a state of the user, a user operation, a state of the XR space, and the like on the basis of at least one of an operation input signal from the operation input unit 201, information from the control unit 202, information from the display unit 203, information from the communication unit 205, sensing data transmitted from the terminal apparatus 112, a controller signal transmitted from the controller device 113, information from the operation control section 222, or information from the space control section 223.

The state of the information processing apparatus 111 to be recognized includes, for example, at least one of a state of each component of the information processing apparatus 111, a state of each of applications including the XR app, a communication state between the information processing apparatus 111 and another apparatus, or various types of setting information (for example, setting values of various setting items and the like). The state of each component of the information processing apparatus 111 includes, for example, at least one of an operation state of each component, presence or absence of an abnormality, or content of the abnormality. The state of each application includes, for example, at least one of a start, an end, or an operation state of the application, presence or absence of an abnormality, or content of the abnormality. The communication state between the information processing apparatus 111 and another apparatus includes, for example, a communication state with the terminal apparatus 112 and a communication state with the controller device 113 via the terminal apparatus 112.

The state of the terminal apparatus 112 to be recognized includes, for example, at least one of a position, an attitude, or behavior of the terminal apparatus 112 or various types of setting information (for example, setting values of various setting items and the like). Note that, for example, in a case where the terminal apparatus 112 is worn by the user, the position, attitude, and behavior of the terminal apparatus 112 indirectly indicate a position, an attitude, and behavior of a body part of the user wearing the terminal apparatus 112.

The state of the surroundings of the terminal apparatus 112 to be recognized includes, for example, at least one of a type, a position, an attitude, behavior, size, a shape, an appearance, or a feature value of a real object around the terminal apparatus 112 (user).

The state of the controller device 113 to be recognized includes, for example, at least one of a position, an attitude, or behavior of the controller device 113 or various types of setting information (for example, setting values of various setting items and the like).

The state of the user to be recognized includes, for example, at least one of a position, an attitude, overall behavior, behavior of a body part, or a line-of-sight direction of the user.

The user operation to be recognized includes, for example, at least one of an operation input through the operation input unit 201, an operation input through the controller device 113, an operation input through a gesture of the user, or an operation input through a virtual tool or the like in the XR space.

The state of the XR space to be recognized includes, for example, at least one of a type, a position, an attitude, behavior, size, a shape, an appearance, or a feature value of a virtual object in the XR space.

The recognition section 221 supplies information regarding recognition results to each component of the information processing apparatus 111.

The recognition section 221 also transmits the information regarding recognition results to the terminal apparatus 112 via the communication unit 205, and transmits the information to the controller device 113 via the communication unit 205 and the terminal apparatus 112. For example, in a case where the recognition section 221 detects a change or an abnormality in the state of the terminal apparatus 112 or the input device 113, the recognition section 221 transmits information indicating a result of the detection to the terminal apparatus 112 via the communication unit 205 or transmits the information to the controller device 113 via the communication unit 205 and the terminal apparatus 112. For example, in a case where the recognition section 221 detects a change (for example, a start, a stop, or the like) or an abnormality in the state of an application such as the XR app, the recognition section 221 transmits information indicating a result of the detection to the terminal apparatus 112 via the communication unit 205, or transmits the information to the controller device 113 via the communication unit 205 and the terminal apparatus 112.

Note that any method of image recognition, object recognition, or the like, for example, can be used for recognition processing of various recognition targets by the recognition section 221.

Furthermore, for example, in a case where a plurality of users shares the XR space, for example, the recognition section 221 performs the recognition processing for each user. For example, the recognition section 221 recognizes a state of the terminal apparatus 112 of each user, a state of an area around the terminal apparatus 112 of each user, a state of the controller device 113 of each user, a state of each user, and a user operation performed by each user. Results of the recognition processing for each user may be shared between the users, for example, by transmitting the results to the terminal apparatus 112 or the controller device 113 of each user.

The operation control section 222 controls operation processing by the controller device 113 on the basis of at least one of recognition results from the recognition section 221 or a controller signal transmitted from the controller device 113.

For example, the operation control section 222 controls operation processing by the controller device 113 on the basis of at least one of the position and attitude of the controller device 113 or the controller signal. For example, the operation control section 222 controls enabling or disabling of each operation member included in the controller device 113, a function assigned to each operation member, a method for operating the function assigned to each operation member, or the like on the basis of a mounting method, a holding method, a use method, and the like of the controller device 113.

The operation control section 222 supplies information regarding control of the operation processing by the controller device 113 to each unit of the information processing apparatus 111.

The space control section 223 controls presentation of a two-dimensional space or a three-dimensional space by the display unit 203 and presentation of an XR space by the terminal apparatus 112 on the basis of at least a subset of the recognition results from the recognition section 221.

For example, the space control section 223 generates a display object to be displayed in a two-dimensional space or a three-dimensional space on the basis of at least a subset of the recognition results from the recognition section 221, and performs various arithmetic operations necessary for construction, display, and the like of the two-dimensional space or the three-dimensional space including behavior of the display object. The space control section 223 generates display control information for controlling the display of the two-dimensional space or the three-dimensional space on the basis of results of the arithmetic operations and supplies the display control information to the display unit 203 to control the display of the two-dimensional space or the three-dimensional space by the display unit 203. Note that the display control information may include, for example, information for using the two-dimensional space or the three-dimensional space (for example, an operation menu, guidance, messages, and the like) and information for notifying of the state of the information processing apparatus 111 (for example, setting information, remaining battery charge, error display, and the like).

For example, the space control section 223 generates a virtual object to be displayed in an XR space on the basis of at least a subset of the recognition results from the recognition section 221, and performs various arithmetic operations necessary for construction, display, and the like of the XR space including behavior of the virtual object. The recognition results from the recognition section 221 include, for example, operation content for the controller device 113a recognized by the recognition section 221 on the basis of the controller signal or the like including the operation input signal from the controller device 113a. The space control section 223 generates display control information for controlling the display of the XR space on the basis of results of the arithmetic operations and transmits the display control information to the terminal apparatus 112 via the communication unit 205 to control the display of the XR space by the terminal apparatus 112. Note that the display control information may include, for example, information for using the XR space (for example, an operation menu, guidance, messages, and the like) and information for notifying of the state of the XR system 101 (for example, setting information, remaining battery charge, error display, and the like).

The space control section 223 supplies information regarding a two-dimensional space, a three-dimensional space, and an XR space to each component of the information processing apparatus 111.

The audio control section 224 controls output of a sound by the terminal apparatus 112 on the basis of at least one of the recognition results from the recognition section 221 or the information from the space control section 223. For example, the space control section 223 generates audio control information for outputting a sound in the terminal apparatus 112. The audio control information includes, for example, information regarding at least one of a type, content, a frequency, amplitude, or a waveform of a sound to be output. The audio control section 224 controls the output of a sound by the terminal apparatus 112 by transmitting the audio control information to the terminal apparatus 112 via the communication unit 205.

The tactile presentation control section 225 controls presentation of a tactile stimulus to the user on the basis of at least one of the recognition results from the recognition section 221 or the information from the space control section 223. For example, the tactile presentation control section 225 generates tactile control information for presenting a tactile stimulus in the controller device 113. The tactile control information includes, for example, information regarding at least one of a type, a pattern, strength, or length of a tactile sensation to be presented. The tactile presentation control section 225 controls presentation of a tactile stimulus by the controller device 113 by transmitting tactile control information to the controller device 113 via the communication unit 205 and the terminal apparatus 112.

The learning section 226 performs learning processing related to processing of the XR system 101 on the basis of at least one of the recognition results from the recognition section 221 or learning data given from the outside. For example, the learning section 226 learns the user's taste, action pattern, and the like, and adjusts various processes and parameters of the XR system 101 on the basis of learning results in such a way as to appropriately respond to the user's taste, action pattern, and the like. For example, the learning section 226 learns differences between an XR space and a real space, and adjusts design data and the like on the basis of the learning results in such a way as to bring characteristics, behavior, and the like of a virtual object in the XR space closer to those of a real object.

The learning section 226 stores, for example, information (for example, a learning model or the like) indicating the learning results in the storage unit 204.

Note that the control unit 202 may execute not only the XR app but also other applications.

The storage unit 204 includes, for example, a read only memory (ROM) that stores programs, operation parameters, and the like to be used for processing by the control unit 202 and a random access memory (RAM) that temporarily stores parameters and the like that change as appropriate.

The communication unit 205 communicates with external devices to transmit and receive data. For example, the communication unit 205 communicates with the terminal apparatus 112 to transmit and receive data. For example, the communication unit 205 transmits the display control information, the audio control information, and the tactile control information to the terminal apparatus 112. For example, the communication unit 205 receives the sensing data and the controller signal from the terminal apparatus 112.

The communication method of the communication unit 205 may be wired or wireless, and for example, a wired LAN, a wireless LAN, Wi-Fi, Bluetooth, or the like is used. Furthermore, the communication unit 205 may support two or more types of communication methods.

The terminal apparatus 112 includes an operation input unit 251, a sensing unit 252, a control unit 253, a display unit 254, an audio output unit 255, and a learning section 226.

The operation input unit 251 includes, for example, an operation input device such as buttons. The operation input unit 201 receives the user's operation input and supplies an operation input signal indicating content of the user's operation input to the control unit 253. For example, the operation input unit 251 receives an operation input by the user, such as turning on or off of the terminal apparatus 112 and adjustment of brightness of the display unit 254.

The sensing unit 252 includes various sensors for sensing the terminal apparatus 112, the surroundings of the terminal apparatus 112, and the state of the user. For example, the sensing unit 252 includes a camera or a depth sensor for capturing an image of the surroundings of the terminal apparatus 112. For example, the sensing unit 252 includes a camera or a depth sensor for capturing an image of the user's eyes. For example, the sensing unit 252 includes an inertial measurement unit (IMU) for detecting acceleration, angular velocity, and the like of the terminal apparatus 112. For example, the sensing unit 252 includes a global navigation satellite system (GNSS) receiver for detecting a current position of the terminal apparatus 112 (user). The sensing unit 252 supplies sensing data indicating a detection result of at least one of the sensors to the control unit 253.

The control unit 253 includes, for example, an electronic circuit such as a CPU or a microprocessor. Furthermore, the control unit 253 may include a ROM that stores programs to be used, operation parameters, and the like, and a RAM that temporarily stores parameters and the like that change as appropriate.

For example, the control unit 253 functions as an arithmetic processing device and a control device, and controls overall operation of the terminal apparatus 112 and performs various processes in accordance with various programs on the basis of the operation input signal from the operation input unit 251, the sensing data from the sensing unit 252, the display control information and the audio control information from the information processing apparatus 111, the controller signal from the controller device 113, and the like. For example, the control unit 253 controls the display of an XR space and the like by the display unit 254 on the basis of the display control information. For example, the control unit 253 controls the output of a sound by the audio output unit 255 on the basis of the audio control information.

The display unit 254 includes various display devices. For example, in a case where the terminal apparatus 112 is an HMD, the display unit 254 includes displays fixed in relation to the left and right eyes of the user, and displays a left-eye image and a right-eye image. The display includes, for example, a display panel such as a liquid crystal display or an organic electro luminescence (EL) display, or a laser scanning display such as a retinal scan display. Furthermore, the display unit 254 may include, for example, an imaging optical system that enlarges and projects display screens to form enlarged virtual images having a predetermined view angle on the user's pupils. For example, the display unit 254 displays an XR space including a virtual object under the control of the control unit 253.

The audio output unit 255 includes, for example, an audio output device such as headphones, earphones, or a speaker. The audio output unit 255 outputs a sound under the control of the control unit 253.

The communication unit 256 communicates with external devices to transmit and receive data. For example, the communication unit 256 communicates with the terminal apparatus 112 and the controller device 113 to transmit and receive data. For example, the communication unit 256 transmits sensing data and a controller signal to the information processing apparatus 111. For example, the communication unit 256 receives the display control information, the audio control information, and the tactile control information from the information processing apparatus 111. For example, the communication unit 256 transmits the tactile control information to the controller device 113. For example, the communication unit 256 receives a controller signal from the controller device 113.

The communication method of the communication unit 256 may be wired or wireless, and for example, a wired LAN, a wireless LAN, Wi-Fi, Bluetooth, or the like is used. Furthermore, the communication unit 256 may support two or more types of communication methods. Moreover, the communication unit 256 may communicate with the information processing apparatus 111 and the controller device 113 using different communication methods.

The following is an example of processing by the information processing apparatus 111 using the XR app.

For example, the communication unit 205 receives input information indicating at least one of the state of the terminal apparatus 112, the state of the surroundings of the terminal apparatus 112, the state of the user, the behavior of the user, or an operation input to the input device 113 from the terminal apparatus 112 or the controller device 113 via the terminal apparatus 112, and supplies the input information to the control section 221. The control section 221 executes the XR app on the basis of the input information, generates output information for controlling display of a virtual object including CAD information regarding CAD in the XR space, and outputs the output information to the terminal apparatus 112. The communication unit 205 transmits the output information to the terminal apparatus 112.

Furthermore, for example, the control section 221 executes the XR app and outputs output information indicating a change or an abnormality in a state of the XR app to the terminal apparatus 112 or the controller device 113. The communication unit 205 transmits the output information to the terminal apparatus 122 or to the controller device 113 via the terminal apparatus 112.

The terminal apparatus 112, on the other hand, for example, notifies of a change or an abnormality in the state of the XR app by an image, a message, a sound, vibration, or the like on the basis of the output information. For example, the controller device 113 notifies of a change or an abnormality in the state of the XR app by vibration or the like on the basis of the output information.

Note that in a case where each component of the information processing apparatus 111 communicates with the outside via the communication unit 205 in the following description, description of the communication unit 205 might be omitted. For example, in a case where the space control section 223 of the information processing apparatus 111 communicates with the terminal apparatus 112 via the communication unit 205, it might be simply described that the space control section 223 of the information processing apparatus 111 communicates with the terminal apparatus 112.

In a case where each component of the terminal apparatus 112 communicates with the outside via the communication unit 256 in the following description, description of the communication unit 256 might be omitted. For example, in a case where the control unit 253 of the terminal apparatus 112 communicates with the information processing apparatus 111 via the communication unit 256, it might be simply described that the control unit 253 of the terminal apparatus 112 communicates with the information processing apparatus 111.

For example, in the XR system 101, the space control section 223 of the information processing apparatus 111 generates the display control information and transmits the display control information to the terminal apparatus 112 via the communication unit 205, and the control unit 253 of the terminal apparatus 112 receives the display control information via the communication unit 256 and controls the display unit 254 on the basis of the display control information. In the following description, description of the series of processing might be simplified, and for example, it might be described that the space control section 223 of the information processing apparatus 111 controls the display unit 254 of the terminal apparatus 112.

For example, in the XR system 101, the audio control section 224 of the information processing apparatus 111 generates audio control information and transmits the audio control information to the terminal apparatus 112 via the communication unit 205, and the control unit 253 of the terminal apparatus 112 receives the audio control information via the communication unit 256 and controls the audio output unit 255 on the basis of the audio control information. In the following description, description of the series of processing might be simplified, and for example, it might be described that the audio control section 224 of the information processing apparatus 111 controls the audio output unit 255 of the terminal apparatus 112.

For example, in the XR system 101, the tactile presentation control section 225 of the information processing apparatus 111 generates tactile control information and transmits the tactile control information to the controller device 113 via the communication unit 205 and the terminal apparatus 112, and the controller device 113 presents a tactile stimulus on the basis of the tactile control information. In the following description, description of the series of processing might be simplified, and for example, it might be described that the tactile presentation control section 225 of the information processing apparatus 111 controls the controller device 113 via the terminal apparatus 112.

### <Configuration Example of Controller Device 113a>

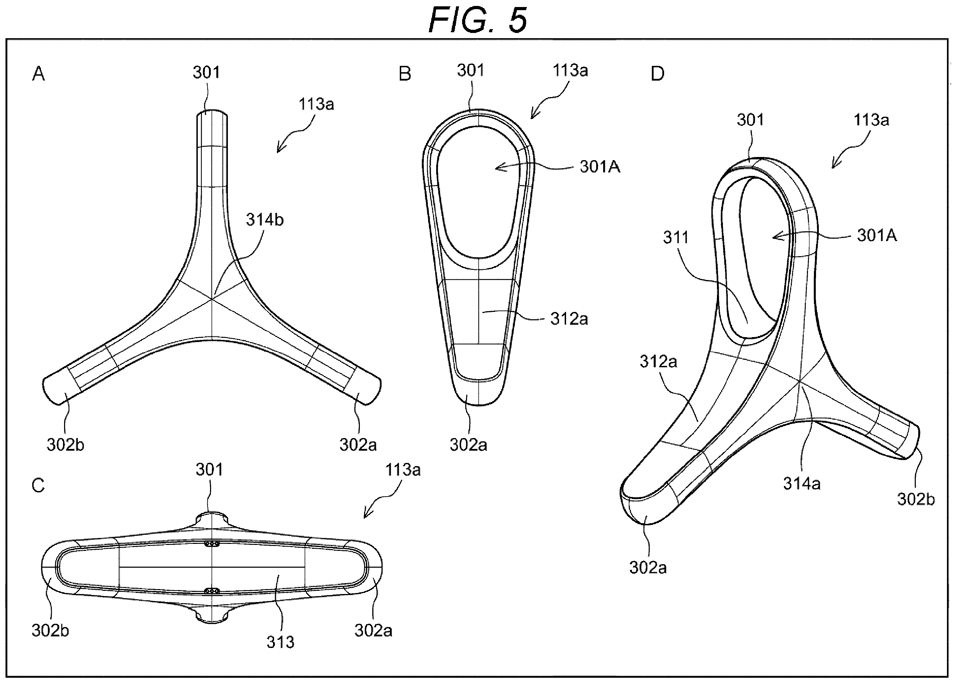

Next, a configuration example of the controller device 113a of Fig. 3 will be described with reference to Figs. 5 to 14.

Fig. 5 illustrates a configuration example of appearances of the controller device 113a. A of Fig. 5 is a left side view of the controller device 113a. B of Fig. 5 is a front view of the controller device 113a. C of Fig. 5 is a bottom view of the controller device 113a. D of Fig. 5 is a perspective view of the controller device 113a as viewed from obliquely front right.

Note that an upward direction in A of Fig. 5 is defined as an upward direction of the controller device 113a, and a downward direction in A of Fig. 5 is defined as a downward direction of the controller device 113a. A right direction in A of Fig. 5 is a front direction of the controller device 113a, and a left direction in A of Fig. 5 is a rear direction of the controller device 113a.

The controller device 113a has a symmetrical shape regardless of a direction in which the controller device 113a is viewed, namely front, rear, left, right, up, or down. Furthermore, in the controller device 113a, a shape of a front surface viewed from the front is similar to a shape of a rear surface viewed from the rear, and a shape of a right side surface viewed from the right is similar to a shape of a left side surface viewed from the left.

The controller device 113a is roughly divided into three parts, namely a ring portion 301, an operation portion 302a, and a holding portion 302b.

As illustrated in A of Fig. 5, the ring portion 301 extends upward from the vicinity of a center of gravity of a left side surface 314b. The operation portion 302a and the holding portion 302b have symmetrical shapes about the ring portion 301 when viewed from a direction of a side surface (for example, the left side surface 314b of the controller device 113a) of the ring portion 301. The operation portion 302a extends forward and obliquely downward from the vicinity of the center of gravity of the left side surface 314b (the vicinity of a lower end of the ring portion 301). The holding portion 302b extends rearward and obliquely downward from the vicinity of the center of gravity of the left side surface 314b (the vicinity of the lower end of the ring portion 301) in symmetry with the operation portion 302a. In a case where a tip of the ring portion 301, a tip of the operation portion 302a, and a tip of the holding portion 302b are connected to one another, an isosceles triangle having the tip of the ring portion 301 as a vertex is formed. An angle between the ring portion 301 and the operation portion 302a, an angle between the ring portion 301 and the holding portion 302b, and an angle between the operation portion 302a and the holding portion 302b are each about 120 degrees, and the above-described isosceles triangle is a substantially equilateral triangle.

Tips of side surfaces of the ring portion 301 extends linearly, and roots extend in curved shapes. Tips of side surfaces of the operation portion 302a extend linearly, and roots extend in curved shapes. Tips of side surfaces of the holding portion 302b extend linearly, and roots extend in curved shapes. A boundary portion between the ring portion 301 and the operation portion 302a, a boundary portion between the ring portion 301 and the holding portion 302b, and a boundary portion between the operation portion 302a and the holding portion 302b are curved.

As illustrated in B of Fig. 5, a hole 301A penetrating in a front-rear direction is formed in the ring portion 301. An outer periphery of the ring portion 301 gently expands toward the tip, and the tip is curved. Similarly, the hole 301A spreads gently toward the tip, and the tip and an end are curved.

As illustrated in B of Fig. 5, the operation portion 302a gradually tapers toward the tip, and the tip is curved. An upper surface 312a of the operation portion 302a is inclined forward and obliquely downward. A shallow groove curved in a lateral direction and extending in the front-rear direction is formed in the upper surface 312a of the operation portion 302a. A tip of the upper surface 312a of the operation portion 302a is slightly recessed with respect to the tip of the operation portion 302a. As a result, in a case where the user's finger is inserted into the hole 301A of the ring portion 301 from the rear to the front, the inserted finger can be easily placed on the upper surface 312a of the operation portion 302a.

The holding portion 302b has the same shape as the operation portion 302a, and an upper surface 312b (not illustrated) having the same shape as the upper surface 312a is formed.

As illustrated in C of Fig. 5, a bottom surface 313 curved in the front-rear direction is formed by a lower surface of the operation portion 302a and a lower surface of the holding portion 302b. A shallow groove curved in the lateral direction and extending in the front-rear direction is formed in the bottom surface 313.

A rubber-like material such as silicone or elastomer, for example, is used for an inner peripheral surface 311, the upper surface 312a, the upper surface 312b, and the bottom surface 313 of the controller device 113a. For other portions of the controller device 113a, for example, an IR transmissive resin is used.

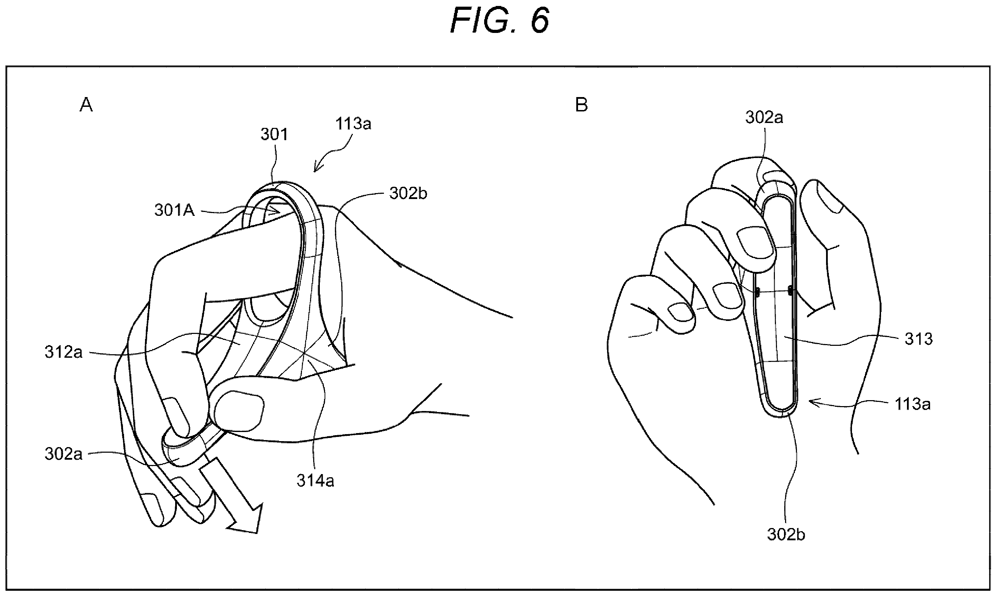

Figs. 6 to 8 illustrate examples of a method for holding the controller device 113a.

For example, as illustrated in A of Fig. 6, an index finger of a right hand is inserted into the ring portion 301 from the back to the front, a tip of the index finger is placed near the tip of the upper surface 312a of the operation portion 302a, and the operation portion 302a can be operated by the index finger. Since size of the hole 301A of the ring portion 301 is slightly larger than thickness of the index finger, the index finger can be easily inserted. A tip of a thumb of the right hand is lightly placed near the tip of the side surface of the operation portion 302a, and the holding portion 302b is lightly gripped and held by a palm of the right hand.

For example, as indicated by an arrow in A of Fig. 6, in a case where the vicinity of the tip of the operation portion 302a is pressed downward by the index finger, the tip of the holding portion 302b comes into contact with the palm as illustrated in B of Fig. 6, and the controller device 113a is prevented from rotating in a pressing direction. As a result, the vicinity of the tip of the operation portion 302a is prevented from shaking in space, and the user can reliably press the vicinity of the tip of the operation portion 302a in a state where a direction of the tip of the operation portion 302a is stable.

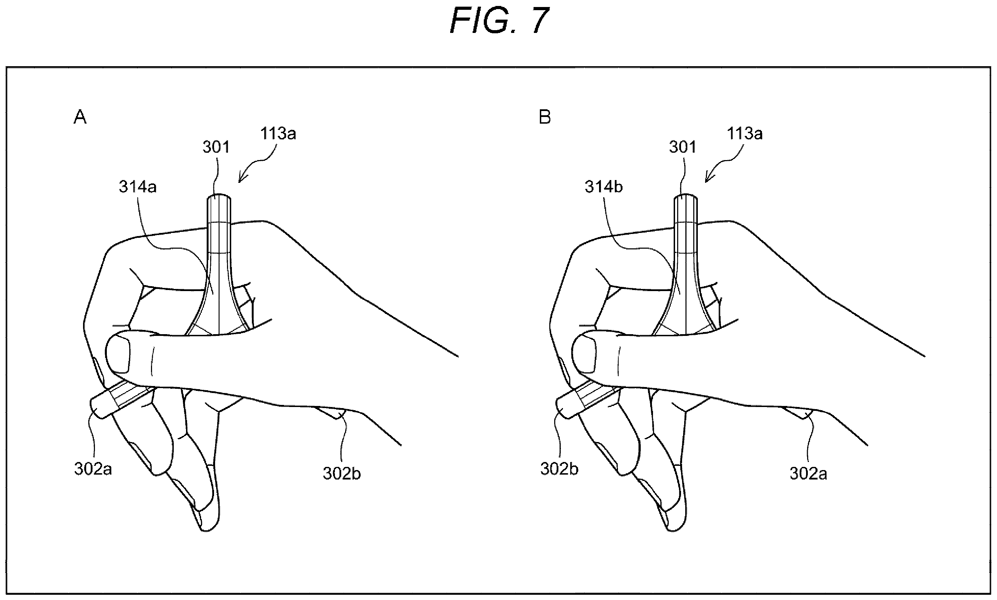

Furthermore, as described above, shapes of the controller device 113a viewed from the front and the rear are similar to each other, and shapes of the controller device 113a viewed from the right and the left are similar to each other. The user, therefore, can hold the controller device 113a without worrying about the front and the rear. That is, as illustrated in A of Fig. 7, the user can hold the controller device 113a such that the operation portion 302a faces a direction of a fingertip and a right side surface 314a faces a direction of the thumb. Alternatively, as illustrated in B of Fig. 7, the user can hold the controller device 113b such that the holding portion 302b faces the direction of the fingertip and the left side surface 314b faces the direction of the thumb.

Note that, as illustrated in A of Fig. 7, holding the controller device 113a such that the operation portion 302a faces the fingertip will be referred to as holding the controller device 113a forward hereinafter. As illustrated in B of Fig. 7, holding the controller device 113a such that the holding portion 302b faces the fingertip will be referred to as holding the controller device 113a backward hereinafter.

In a case where the controller device 113a is held backward, roles of the operation portion 302a and the holding portion 302b are switched. That is, the holding portion 302b functions as an operation portion that can be operated by the index finger of the right hand, and the operation portion 302a functions as a holding portion held by the palm of the right hand.

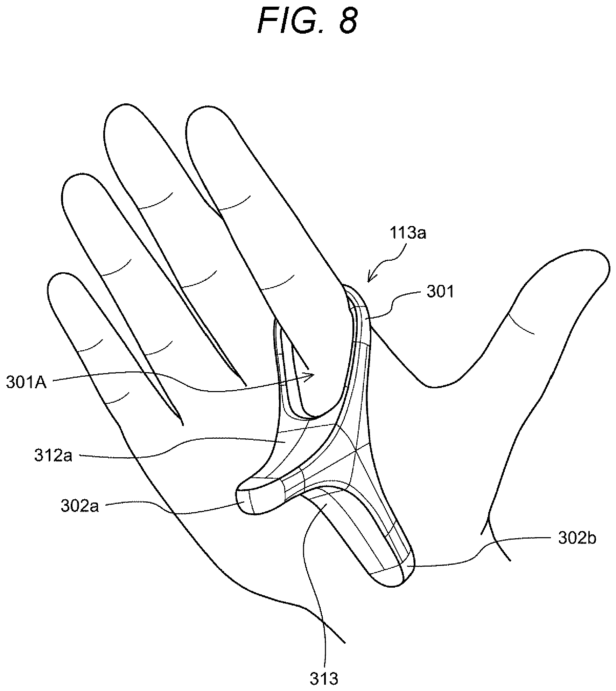

Furthermore, as illustrated in Fig. 8, even if the user releases his/her hand from the controller device 113a, the ring portion 301 is caught by the index finger, and the controller device 113a does not fall. This prevents the user from unexpectedly dropping the controller device 113a without providing a strap or the like.

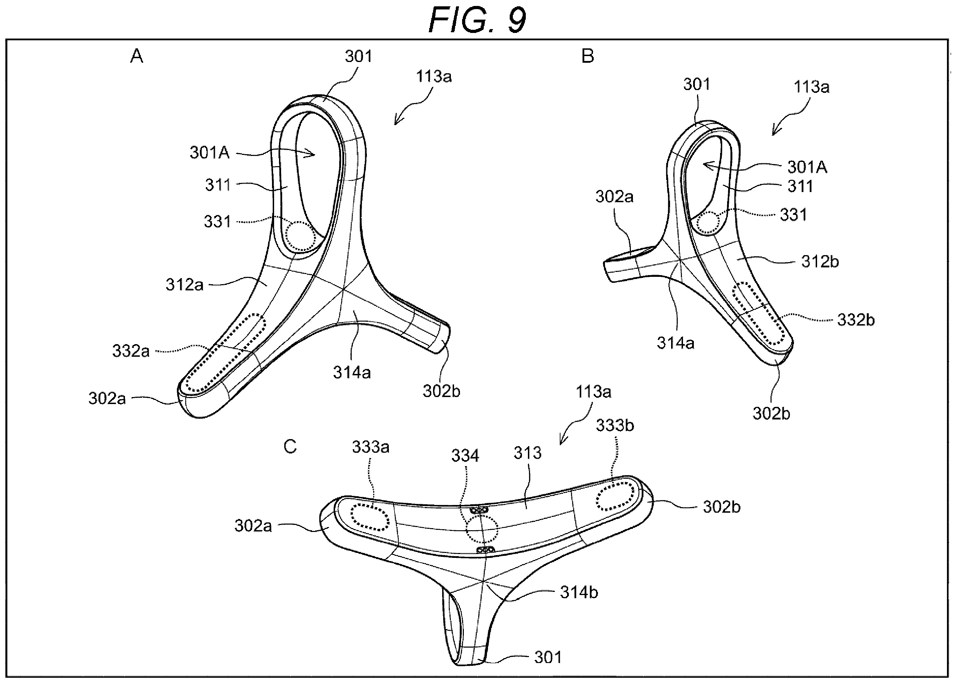

Fig. 9 illustrates an arrangement example of the operation members of the controller device 113a. A of Fig. 9 is a perspective view of the controller device 113a as viewed from obliquely upper right. B of Fig. 9 is a perspective view of the controller device 113a as viewed from obliquely upper left. C of Fig. 9 is a perspective view of the controller device 113a as viewed from obliquely rear downward.

The individual operation members are disposed symmetrically about the ring portion 301 in the front-rear direction and a left-right direction of the controller device 113a.

For example, an operation member 331 is disposed at the lower end of the inner peripheral surface 311 (hole 301A) of the ring portion 301. For example, the user bends his/her index finger and operates the operation member 331 with the fingertip of the index finger.

An operation member 332a is disposed near the tip of the upper surface 312a of the operation portion 302a. An operation member 332b is disposed near the tip of the upper surface 312b of the holding portion 302b. For example, the user operates the operation member 332a or the operation member 332b with the fingertip of his/her index finger.

An operation member 333a and an operation member 333b are disposed near a front end and a rear end of the bottom surface 313, respectively. For example, the user operates the operation member 333a or the operation member 333b with a fingertip of his/her ring finger or little finger.

An operation member 334 is disposed at a center of the bottom surface 313 in the front-rear direction. For example, the user operates the operation member 334 with a fingertip of his/her thumb, ring finger, or little finger.

Any type of operation member such as a button, a touch pad, or a joystick, for example, may be used as each of the operation member 331, the operation member 332a, the operation member 332b, the operation member 333a, the operation member 333b, and the operation member 334. The same type of operation member, however, is used as the operation member 332a and the operation member 332b arranged at symmetrical positions about the ring portion 301. Similarly, the same type of operation member is used as the operation member 333a and the operation member 333b arranged at symmetrical positions about the ring portion 301.

Any function can be assigned, for example, to each of the operation member 331, the operation member 332a, the operation member 332b, the operation member 333a, the operation member 333b, and the operation member 334. The same function is assigned, however, to the operation member 332a and the operation member 332b arranged at symmetrical positions about the ring portion 301. Similarly, the same function is assigned to the operation member 333a and the operation member 333b arranged at symmetrical positions about the ring portion 301.

Specifically, for example, a function of calling a main menu screen is assigned to the operation member 331. For example, a function of selecting a virtual object is assigned to the operation member 332a and the operation member 332b. For example, functions other than the selection function of the operation member 332a and the operation member 332b are assigned to the operation member 333a and the operation member 333b. For example, a function of calling a sub menu screen is assigned to the operation member 334.

Note that, for example, different functions may be assigned to the operation member 332a and the operation member 332b, and these functions may be switched depending on a direction in which the controller device 113a is held. Similarly, for example, different functions may be assigned to the operation member 333a and the operation member 333b, and these functions may be switched depending on a direction in which the controller device 113a is held.

The user can thus perform similar operations regardless of whether the user holds the controller device 113a forward or backward.

Note that although it is assumed that an index finger is inserted into the ring portion 301, for example, a middle finger or a ring finger may be inserted and used.

Note that in a case where it is not necessary to distinguish the operation member 332a and the operation member 332b from each other, they will be simply referred to as the operation members 332 hereinafter. In a case where it is not necessary to distinguish the operation member 333a and the operation member 333b from each other, they will be simply referred to as the operation members 333 hereinafter.

### <Arrangement Examples of Markers>

For example, markers such as IR light-emitting elements may be provided for the controller device 113a. The recognition section 221 of the information processing apparatus 111 may then detect the markers of the controller device 113a on the basis of an image or the like sensed by the sensing unit 252 of the terminal apparatus 112, and recognize relative positions and relative attitudes of the terminal apparatus 112 and the controller device 113 on the basis of positions of the detected markers.

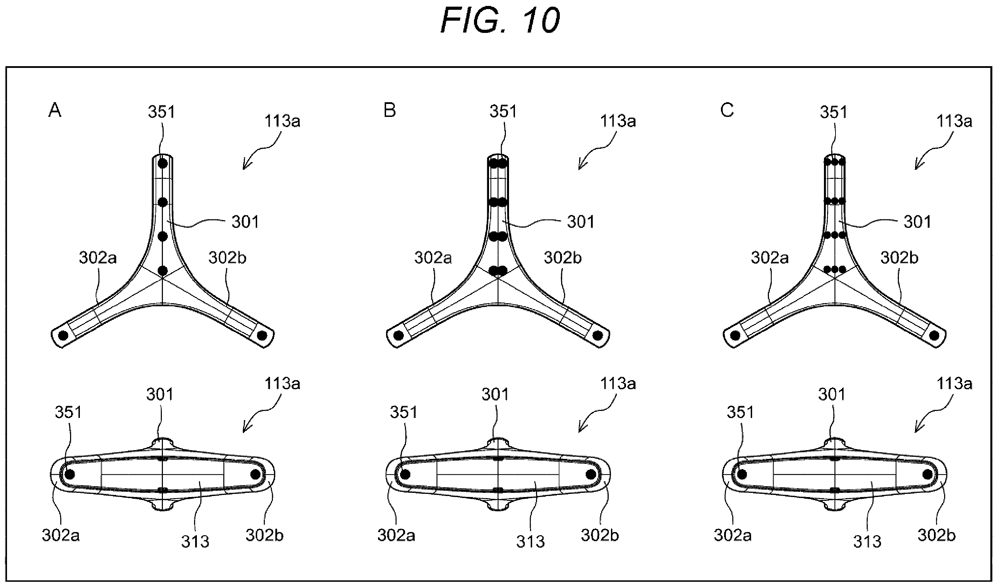

Fig. 10 illustrates arrangement examples of markers 351 of the controller device 113a. Each marker 351 is indicated by a solid circle.

For example, as illustrated in A of Fig. 10, the markers 351 are arranged in a vertical direction on the right side surface 314a and the left side surface 314b in such a way as to surround the outer periphery of the ring portion 301. For example, the markers 351 are disposed near the tips of the both side surfaces of the operation portion 302a and near the tips of the both side surfaces of the holding portion 302b. For example, the markers 351 are disposed near the front end and the rear end of the bottom surface 313.

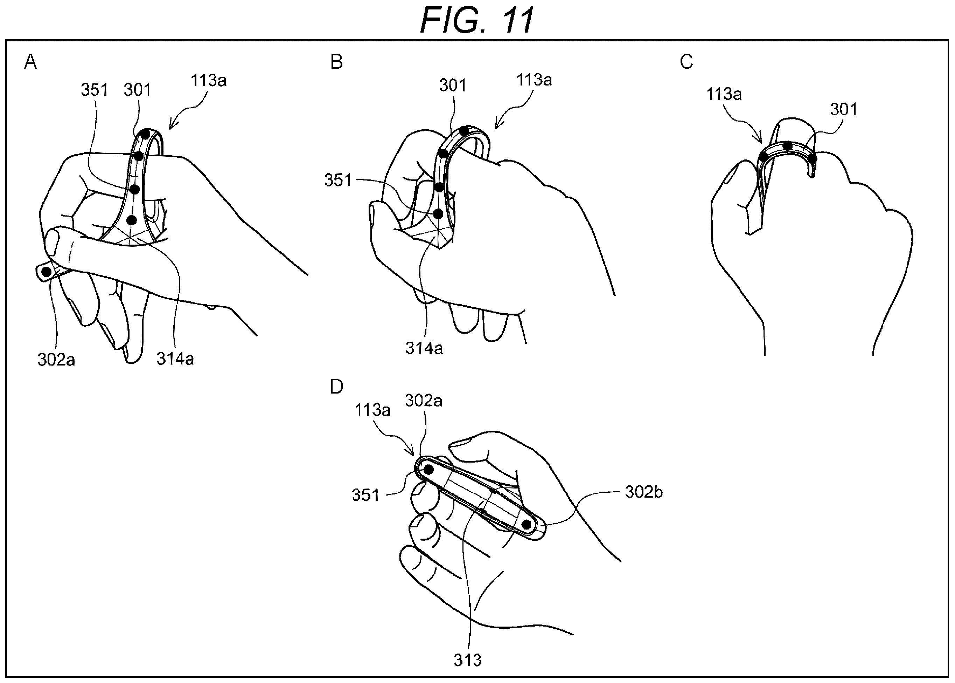

As a result, as illustrated in A to D of Fig. 11, at least a subset of the markers 351 becomes visible in any attitude of the controller device 113a without being covered by the user's hand.

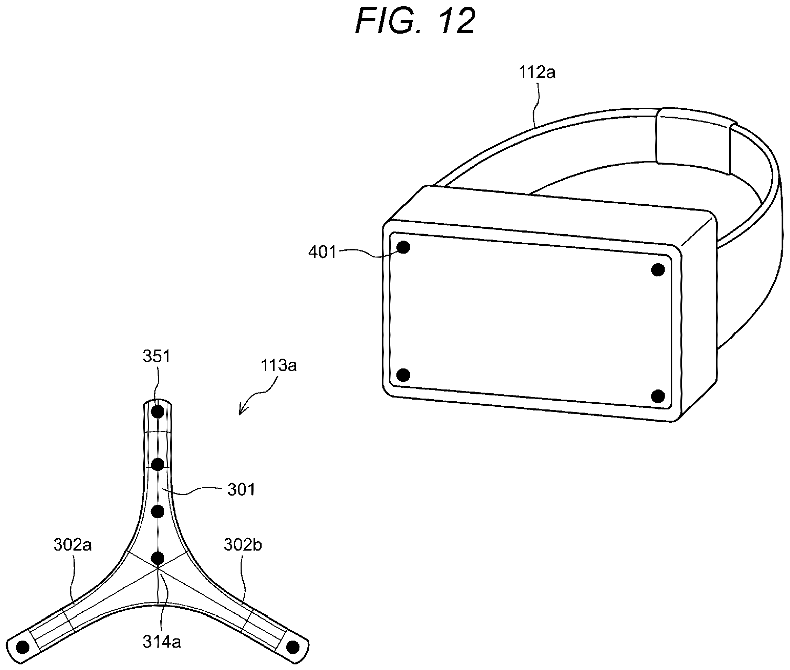

It is assumed, on the other hand, for example, that the terminal apparatus 112 includes a plurality of cameras 401 as illustrated in Fig. 12. Each camera 401 constitutes the sensing unit 252 (Fig. 4) of the terminal apparatus 112. Each camera 401 captures an image of the controller device 113a. The terminal apparatus 112 transmits sensing data including captured image data obtained by image capture to the information processing apparatus 111.

The control unit 202 of the information processing apparatus 111, on the other hand, receives the sensing data. The recognition section 221 of the control unit 202 recognizes a position and an attitude of the controller device 113a with respect to the terminal apparatus 112 on the basis of a light emission pattern of the markers 351 of the controller device 113a.

Note that, for example, as illustrated in B of Fig. 10, the markers 351 may be arranged in two rows in the lateral direction in such a way as to surround the outer periphery of the ring portion 301. Alternatively, for example, as illustrated in C of Fig. 10, the markers 351 may be arranged in three rows in the lateral direction in such a way as to surround the outer periphery of the ring portion 301.

By disposing the markers 351 on the outer periphery of the ring portion 301 like this, the controller device 113a can be downsized.

### <Example of Internal Structure of Controller Device 113a>

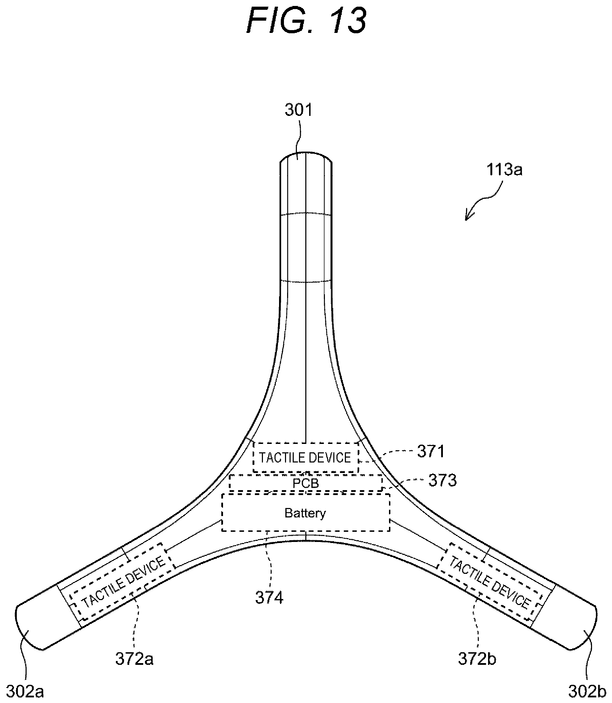

Next, an example of an internal structure of the controller device 113a will be described with reference to Fig. 13.

The controller device 113a incorporates a tactile device 371, a tactile device 372a, a tactile device 372b, a board 373, and a battery 374.

Each of the tactile device 371, the tactile device 372a, and the tactile device 372b includes, for example, a device that presents (transmits) a tactile stimulus such as vibration, namely a linear resonant actuator (LRA), an eccentric rotating mass (ERM), a piezoelectric element, or the like.

The tactile device 371 is disposed near the lower end of the inner peripheral surface 311 of the ring portion 301 (near the operation member 331 (Fig. 9)), and presents a tactile stimulus near the lower end of the inner peripheral surface 311.

The tactile device 372a is disposed near the tip of the operation portion 302a (near the operation member 332a (Fig. 9)), and transmits a tactile stimulus to the vicinity of the tip of the operation portion 302a.

The tactile device 372b is disposed near the tip of the holding portion 302b (near the operation member 332b (Fig. 9)), and transmits a tactile stimulus to the vicinity of the tip of the holding portion 302b.

The board 373 is a board for controlling the controller device 113a, and is disposed substantially at a center in the controller device 113a and below the tactile device 371.

The battery 374 is disposed in the controller device 113a below the board 373 and supplies power to each component of the controller device 113a.

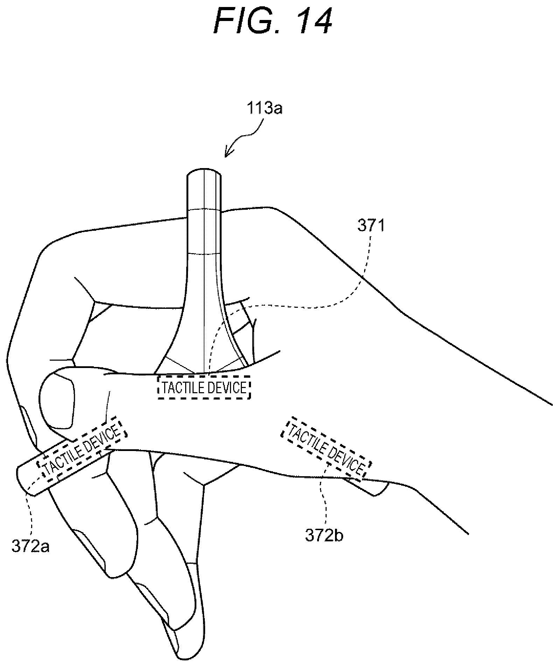

For example, as illustrated in Fig. 14, in a case where the controller device 113a is held forward by the user's right hand, the tactile device 371 presents a tactile stimulus near a base of the thumb. The tactile device 372a presents a tactile stimulus near the fingertip of the thumb and near the fingertip of the index finger. The tactile device 372b presents a tactile stimulus near the base of the thumb and the palm.

Note that the tactile device 371, the tactile device 372a, and the tactile device 372b are arranged at symmetrical positions about the ring portion 301 in the front-rear direction of the controller device 113a. Regardless of whether the user holds the controller device 113a forward or backward, therefore, similar tactile stimuli are presented to the user's hand.

### <Processing by XR system 101>

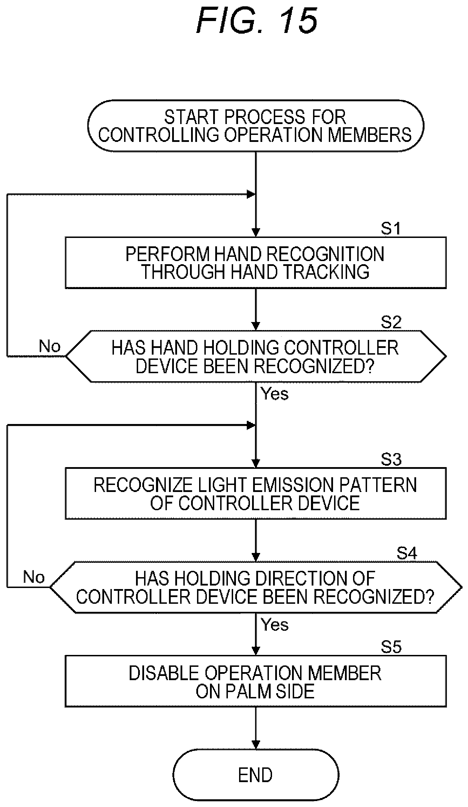

Next, processing by the XR system 101 will be described with reference to Figs. 15 to 23.

### <Process for Controlling Operation Members>

First, a process for controlling the operation members performed by the XR system 101 will be described with reference to a flowchart of Fig. 15.

This process is performed, for example, when the user holds or reholds the controller device 113a.

In step S1, the information processing apparatus 111 performs hand recognition through hand tracking.

For example, the control unit 253 of the terminal apparatus 112 transmits, to the information processing apparatus 111, sensing data including captured image data indicating an image captured by each camera 401.

The control unit 202 of the information processing apparatus 111, on the other hand, receives the sensing data. The recognition section 221 of the control unit 202 performs hand recognition through hand tracking on the basis of the captured image data included in the sensing data. As a result, for example, the recognition section 221 tracks the user's hand holding the controller device 113a on the basis of the markers 351 provided for the controller device 113a.

In step S2, the recognition section 221 determines, on the basis of a result of the processing in step S1, whether or not a hand holding the controller device 113a has been recognized. If it is determined that a hand holding the controller device 113a has not been recognized, the process returns to step S1.

Thereafter, the processing in steps S1 and S2 is repeatedly performed until it is determined in step S2 that a hand holding the controller device 113a has been recognized.

If it is determined in step S2, on the other hand, that a hand holding the controller device 113a has been recognized, the process proceeds to step S3.

In step S3, the recognition section 221 recognizes a light emission pattern of the controller device 113a on the basis of the captured image data. That is, the recognition section 221 recognizes the light emission pattern of the markers 351 not hidden by the user's hand in the controller device 113a.

In step S4, the recognition section 221 determines whether or not a holding direction of the controller device 113a has been recognized. Specifically, the recognition section 221 attempts to recognize the holding direction of the controller device 113a on the basis of a result of the recognition of the user's hand holding the controller device 113a and a result of the recognition of the light emission pattern of the controller device 113a. If it is then determined that the holding direction of the controller device 113a has not been recognized, the process returns to step S3.

Thereafter, the processing in steps S3 and S4 is repeatedly performed until it is determined in step S4 that the holding direction of the controller device 113a has been recognized.

If it is determined in step S4, on the other hand, that the holding direction of the controller device 113a has been recognized, the process proceeds to step S5.

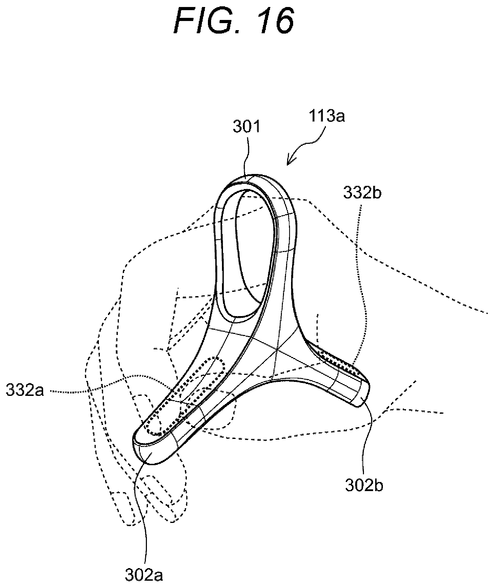

In step S5, the operation control section 222 disables an operation member on a palm side. For example, as illustrated in Fig. 16, in a case where the controller device 113a is held forward, the operation member 332b on the palm side is disabled. Thereafter, for example, the recognition section 221 and the operation control section 222 ignore the operation input signal from the operation member 332b.

In a case where the controller device 113a is held backward, on the other hand, for example, the operation member 332a on the palm side is disabled.

Thereafter, the process for controlling the operation members ends.

As a result, the operation members 332 are prevented from being erroneously operated by the user's palm.

As described above, the hand holding the controller device 113a and the holding direction are recognized, and operability of the controller device 113a does not change regardless of the holding direction of the controller device 113a.

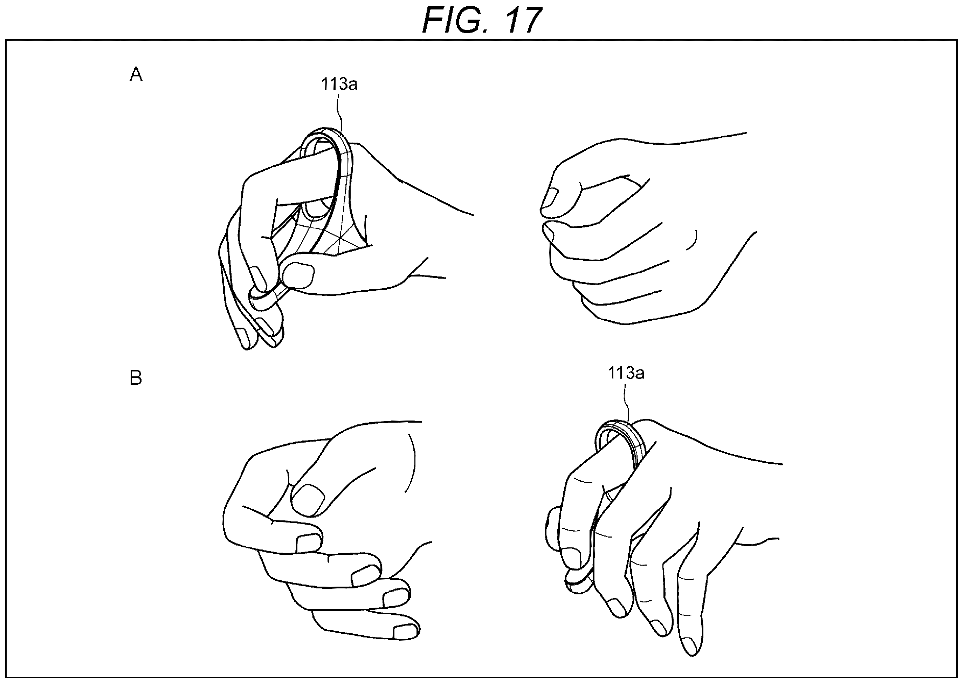

As illustrated in A and B of Fig. 17, therefore, for example, even if no special settings are made on a terminal apparatus 112 side, the user can use the controller device 113a with his/her dominant hand whichever the user's dominant hand is.

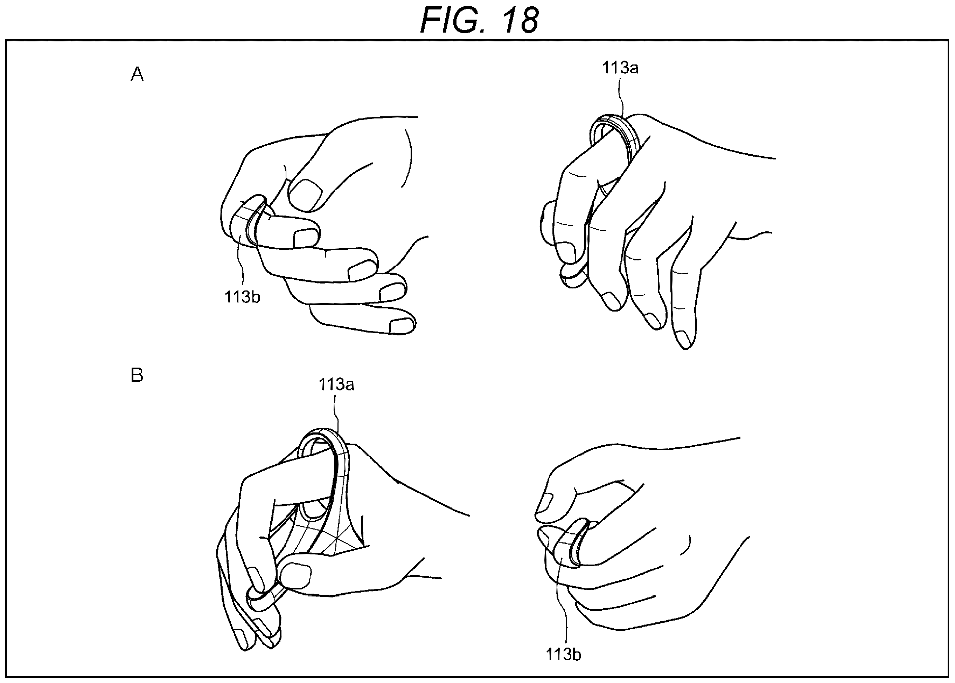

Note that, for example, as illustrated in A and B of Fig. 18, the user can wear another controller device 113b such as a ring-type device on his/her non-dominant hand side to use the controller device 113b.

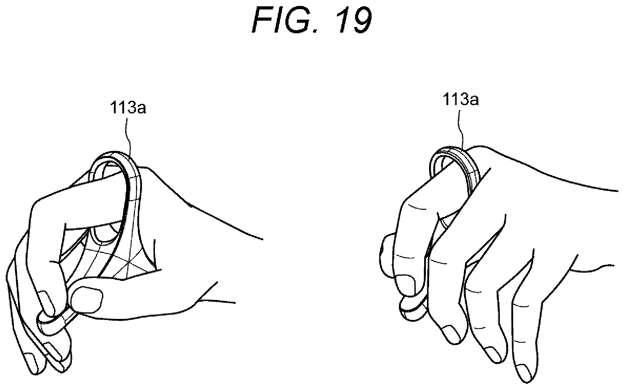

Furthermore, for example, as illustrated in Fig. 19, the user can wear controller devices 113a on both hands to use the controller devices 113a.

### <Process for Controlling Tactile Feedback>

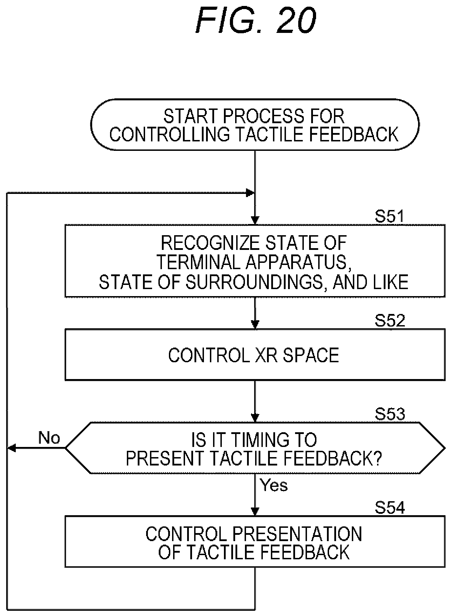

Next, a process for controlling tactile feedback performed by the XR system 101 will be described with reference to a flowchart of Fig. 20.

This process starts, for example, when the information processing apparatus 111 is turned on, and ends when the information processing apparatus 111 is turned off.

In step S51, the information processing apparatus 111 recognizes the state of the terminal apparatus 112, the state of the surroundings of the terminal apparatus 112, and the like.

Specifically, the sensing unit 252 of the terminal apparatus 112 senses the state of the terminal apparatus 112 and the state of the surroundings of the terminal apparatus 112, and supplies sensing data indicating a result of the sensing to the control unit 253. The control unit 253 transmits the sensing data to the information processing apparatus 111.

The control unit 202 of the information processing apparatus 111, on the other hand, receives the sensing data.

The controller device 113a transmits a controller signal including an operation input signal indicating operation content for each operation member to the information processing apparatus 111 via the terminal apparatus 112.

The control unit 202 of the information processing apparatus 111, on the other hand, receives the controller signal.

The recognition section 221 of the control unit 202 recognizes the state of the terminal apparatus 112, the state of the surroundings of the terminal apparatus 112, the state of the controller device 113, the state of the user, a user operation, and the like on the basis of the sensing data and the controller signal. For example, the recognition section 221 recognizes the position and attitude of the terminal apparatus 112. For example, the recognition section 221 recognizes the line-of-sight direction of the user. For example, the recognition section 221 recognizes the position and attitude of the controller device 113a with respect to the terminal apparatus 112. For example, the recognition section 221 recognizes operation content for the controller device 113a.

In step S52, the space control section 223 of the information processing apparatus 111 controls an XR space. Specifically, the space control section 223 generates a virtual object to be displayed in an XR space on the basis of at least a subset of the recognition results from the recognition section 221, and performs various arithmetic operations necessary for construction, display, and the like of the XR space including behavior of the virtual object. The space control section 223 generates display control information for controlling the display of the XR space on the basis of results of the arithmetic operations and transmits the display control information to the terminal apparatus 112 via the communication unit 205 to control the display of the XR space by the terminal apparatus 112.

The recognition section 221 recognizes types, positions, attitudes, and the like of virtual objects around the terminal apparatus 112 (user) on the basis of the information and the like from the space control section 223.

In step S53, the tactile presentation control section 225 determines whether or not it is a timing to present tactile feedback on the basis of at least one of the recognition results from the recognition section 221 or the information from the space control section 223. If it is determined that it is not the timing to present tactile feedback, the process returns to step S51.

Thereafter, the processing in steps S51 to S53 is repeatedly performed until it is determined in step S53 that it is the timing to present tactile feedback.

If it is determined in step S53, on the other hand, that it is the timing to present tactile feedback, the process proceeds to step S54.

In step S54, the information processing apparatus 111 controls presentation of tactile feedback. Specifically, the tactile presentation control section 225 generates tactile control information for causing the controller device 113a to present a tactile stimulus. The tactile presentation control section 225 transmits a tactile control signal to the controller device 113a via the terminal apparatus 112.

The controller device 113a, on the other hand, receives the tactile control information. Each tactile device of the controller device 113a presents a tactile stimulus on the basis of the tactile control information.

Thereafter, the process returns to step S51, and the processing in step S51 and subsequent steps is performed.

The controller device 113a thus appropriately presents a tactile stimulus to the user.

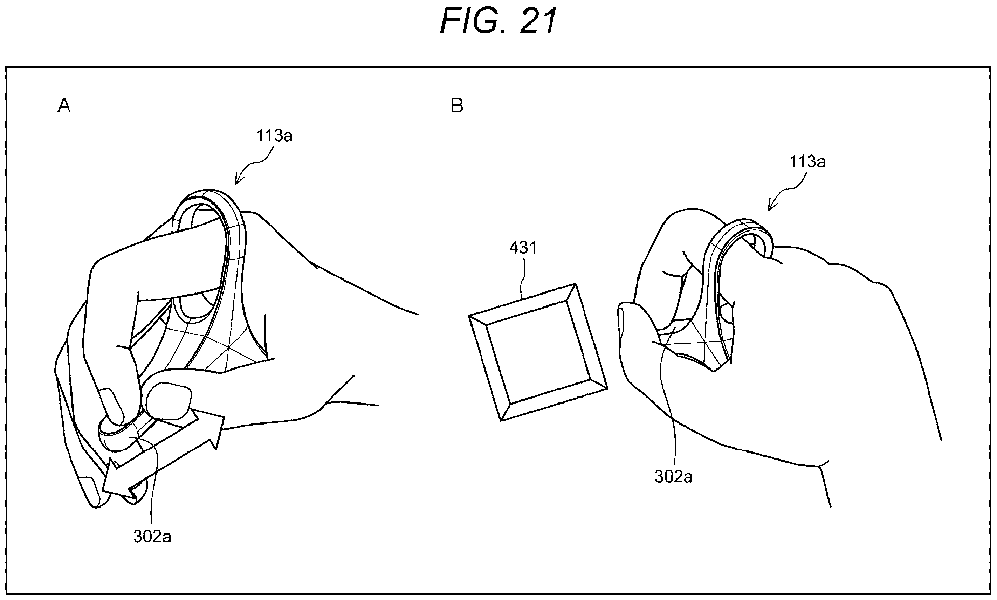

Here, examples of a method of presenting tactile feedback performed by the controller device 113a will be described with reference to Figs. 21 to 23.

For example, in a case where the operation member 332a (Fig. 9) near the tip of the operation portion 302a of the controller device 113a includes a touch pad and the fingertip of the index finger slides the operation member 332a in the front-rear direction as illustrated in A of Fig. 21, the tactile device 372a (Fig. 13) disposed near the operation member 332a presents a tactile stimulus to the fingertip of the index finger.

For example, as illustrated in B of Fig. 21, in a case where the user touches a button 431 in the XR space with the tip of the operation portion 302a of the controller device 113a, the tactile device 372a (Fig. 13) presents a tactile stimulus to the fingertip of the index finger.

For example, in a case where the hand holding the controller device 113a or the controller device 113a collides with a virtual object in the XR space, an impact due to the collision is expressed using each tactile device of the controller device 113a.

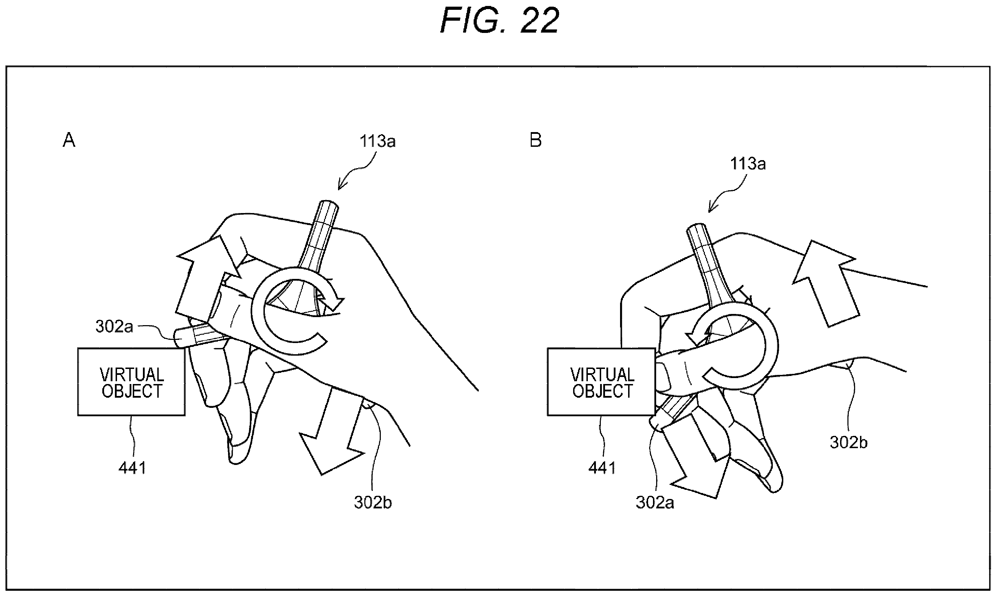

For example, A of Fig. 22 illustrates an example of a case where the tip of the operation portion 302a of the controller device 113a collides with a virtual object 441 in the XR space from above. In this case, for example, the tactile device 372a (Fig. 13) near the tip of the operation portion 302a presents upward vibration, and the tactile device 372b (Fig. 13) near the tip of the holding portion 302b presents downward vibration. As a result, it is possible to make the user feel upward rotational force (moment) with respect to the controller device 113a.

For example, B of Fig. 22 illustrates an example of a case where the tip of the operation portion 302a of the controller device 113a collides with the virtual object 441 in the XR space from below. In this case, for example, the tactile device 372a (Fig. 13) near the tip of the operation portion 302a presents downward vibration, and the tactile device 372b (Fig. 13) near the tip of the holding portion 302b presents upward vibration. As a result, it is possible to make the user feel downward rotational force (moment) with respect to the controller device 113a.

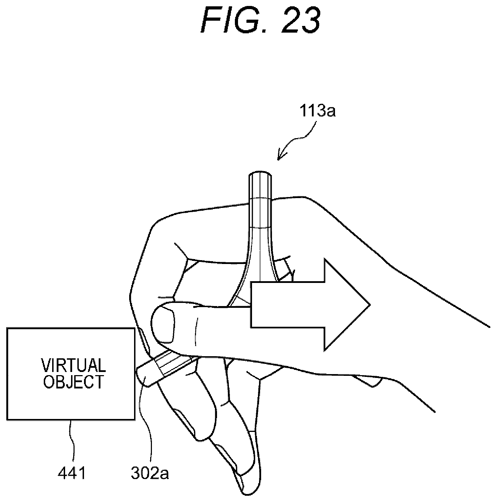

For example, Fig. 23 illustrates an example of a case where the tip of the operation portion 302a of the controller device 113a collides with the virtual object 441 in the XR space from the front. In this case, for example, the entirety of the controller device 113a is vibrated by vibrating the tactile device 371 (Fig. 13) near the center of the controller device 113a. As a result, the user can feel reaction force from the virtual object 441 to the controller device 113a.

The operability of the controller device 113a can thus be improved. As a result, operability with respect to the XR space improves.

### <<2. Application Examples>>

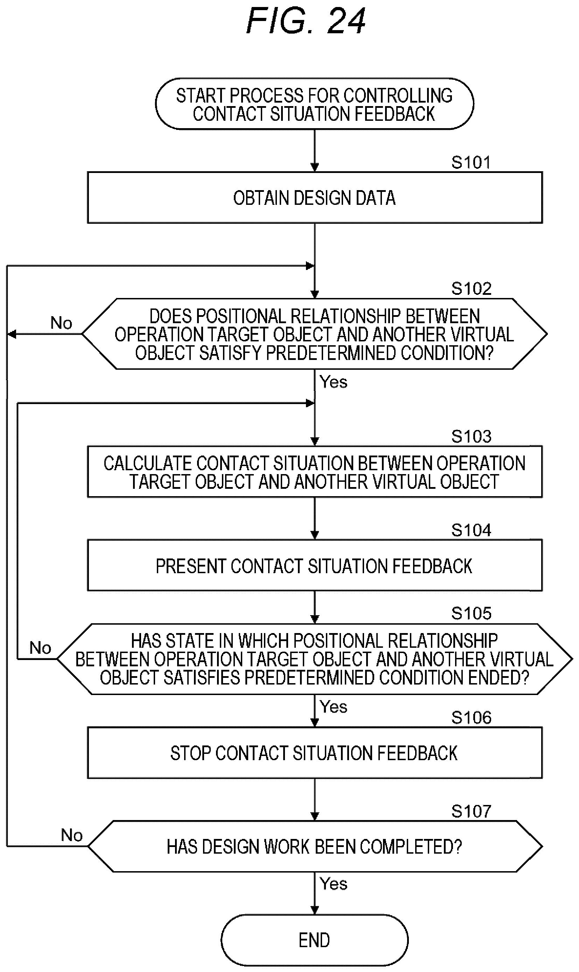

Next, application examples of the present technology will be described with reference to Figs. 24 to 42.

Specifically, examples of a case where the XR system 101 is applied to three-dimensional CAD will be described.

For example, in a case where virtual objects designed using three-dimensional CAD are actually output, that is, in a case where real objects are generated (for example, prototyped or manufactured) in the real world on the basis of designed virtual objects, components cannot be assembled together in some cases. For example, components that do not come into contact with each other in three-dimensional CAD might come into contact with each other as real objects, or real objects might be generated with contact being overlooked since the contact has not been recognized in three-dimensional CAD.

The XR system 101, on the other hand, presents multisensory feedback representing a specific contact situation in a case where assembly (for example, insertion, fitting, screwing, bonding, incorporation, and the like) of components that are virtual objects is checked in three-dimensional CAD. That is, the XR system 101 presents feedback representing a specific contact situation (hereinafter referred to as contact situation feedback) as, for example, one or more of visual sensation, auditory sensation, and tactile sensation. For example, the XR system 101 feeds back a virtual sensation of contact between virtual objects using tactile stimulation.

Here, the virtual sensation of contact is, for example, a simulation or abstraction of a real sense of contact that occurs in a case where a plurality of real objects corresponding to a plurality of virtual objects come into contact with each other in the real world. Specifically, for example, the virtual sensation of contact is obtained by simulating or abstracting force necessary for assembling together a plurality of real objects corresponding to a plurality of virtual objects in the real world.

Furthermore, the XR system 101 facilitates improvement of a contact situation between components by proposing or implementing a solution.

As a result, in a case where objects based on three-dimensional CAD design are output, it is possible to avoid a situation where components come into contact with each other and cannot be assembled together, and it is possible to suppress a cost and time required for the design.

Note that each of components used for description in the following examples is assumed to be a component based on a virtual object displayed in an XR space unless otherwise specified.

Furthermore, a virtual object to be operated among virtual objects will be referred to as an operation target object hereinafter. A component to be operated among components that are virtual objects will be referred to as an operation target component.

### <First Embodiment of Process for Controlling Contact Situation Feedback>

Here, a first embodiment of a process for controlling contact situation feedback performed by the XR system 101 will be described with reference to a flowchart of Fig. 24.

This process is started, for example, when the user starts design work based on three-dimensional CAD using the XR system 101.

In step S101, the information processing apparatus 111 obtains design data.

For example, the user inputs, via the operation input unit 201, design data regarding each component (virtual object) used for an object to be designed.

The design data includes, for example, invariable data that does not change in accordance with the situation and variable data that changes in accordance with the situation.

The invariable data includes, for example, data regarding characteristics of each component and data that regards characteristics of a machine used to manufacture objects and that does not change due to aging. The data regarding the characteristics of each component includes, for example, a material, elasticity, a friction coefficient, strength, hardness, toughness, specific gravity, clearance, and the like of each component. The data that regards the characteristics of the machine and that does not change due to aging includes, for example, a material, an operation sequence, and the like of the machine.

The variable data includes, for example, data that changes due to aging of the machine and data attributed to the user. The data that changes due to aging of the machine includes, for example, accuracy of operation (for example, manufacturing, measurement, and the like) of the machine. The data attributed to the user includes, for example, design data obtained in accordance with an empirical rule of the user and data regarding human errors caused by the user.

The space control section 223 obtains the design data and stores the design data in the storage unit 204.

Note that the design data may be, for example, stored in the storage unit 204 in advance, or may be downloaded from a server or the like. Furthermore, for example, the design data may be updated as necessary during execution of the process for controlling contact situation feedback.

In step S102, the recognition section 221 of the information processing apparatus 111 determines whether or not a positional relationship between an operation target object and another virtual object satisfies a predetermined condition.

Specifically, the recognition section 221 recognizes the state of the terminal apparatus 112, the state of the surroundings of the terminal apparatus 112, the state of the controller device 113, the state of the user, a user operation, the state of the XR space, and the like on the basis of at least one of the operation input signal from the operation input unit 201, the sensing data transmitted from the terminal apparatus 112, the controller signal transmitted from the controller device 113, the information from the operation control section 222, or the information from the space control section 223. For example, the recognition section 221 recognizes a state of each virtual object in the XR space.

The recognition section 221 recognizes a positional relationship between the operation target object and another virtual object in the XR space on the basis of the state of each virtual object in the XR space. If the recognition section 221 then determines that the positional relationship between the operation target object and another virtual object satisfies the predetermined condition, the process proceeds to step S103.

The predetermined condition is set on the basis of, for example, presence or absence of contact between the operation target object and another virtual object, a distance between the operation target object and another virtual object, and the like. For example, whether the operation target object is in contact with another virtual object, whether the distance between the operation target object and another virtual object is smaller than or equal to a predetermined threshold (hereinafter referred to as a distance threshold), or the like is set as the predetermined condition.

The distance threshold is set, for example, on the basis of characteristics of a real object corresponding to the virtual object. Note that the distance threshold may be 0 or more and 0 or less.

In step S103, the space control section 223 of the information processing apparatus 111 calculates a contact situation between the operation target object and another virtual object. For example, the space control section 223 calculates presence or absence of contact between the operation target object and another virtual object, force applied to the operation target object and the another virtual object at a time of contact, the amount of deformation of the operation target object and the another virtual object at the time of contact, and the like on the basis of the positional relationship between the operation target object and the another virtual object and the design data regarding the operation target object and the another virtual object.

In step S104, the XR system 101 presents contact situation feedback. Specifically, a presentation control unit achieved by at least a subset of the space control section 223, the audio control section 224, and the tactile presentation control section 225 of the information processing apparatus 111 controls presentation of contact situation feedback representing contact situations between the virtual objects.

For example, the space control section 223 controls the display unit 254 of the terminal apparatus 112 in such a way as to present visual feedback representing a contact situation between an operation target object and another virtual object through visual stimulation.

For example, the audio control section 224 controls the audio output unit 255 of the terminal apparatus 112 in such a way as to present auditory feedback representing a contact situation between an operation target object and another virtual object through auditory stimulation.

For example, the tactile presentation control section 225 controls the controller device 113 via the terminal apparatus 112 in such a way as to present tactile feedback representing a contact situation between an operation target object and another virtual object through tactile stimulation.

Note that it is not always necessary to present all of the visual feedback, the auditory feedback, and the tactile feedback, and it is only required that at least one of these be presented.

Furthermore, although details will be described later, a virtual sensation of contact between an operation target object and another virtual object, for example, may be presented through tactile feedback.

In step S105, the space control section 223 of the information processing apparatus 111 determines whether or not a state in which the positional relationship between the operation target object and the another virtual object satisfies the predetermined condition has ended. If it is determined that the state in which the positional relationship between the operation target object and the another virtual object satisfies the predetermined condition still continues, the process returns to step S103.

Thereafter, the processing in steps S103 to S105 is repeatedly performed until it is determined in step S105 that the state in which the positional relationship between the operation target object and the another virtual object satisfies the predetermined condition has ended.

As a result, contact situation feedback based on a contact situation between an operation target object and another virtual object is continuously presented as necessary.

If it is determined in step S105, on the other hand, that the state in which the positional relationship between the operation target object and the other virtual object satisfies the predetermined condition has ended, the process proceeds to step S106.

In step S106, the XR system 101 stops the contact situation feedback. For example, the space control section 223 of the information processing apparatus 111 controls the display unit 254 of the terminal apparatus 112 in such a way as to stop the visual feedback. For example, the audio control section 224 of the information processing apparatus 111 controls the audio output unit 255 of the terminal apparatus 112 in such a way as to stop the auditory feedback. For example, the tactile presentation control section 225 of the information processing apparatus 111 controls the controller device 113 via the terminal apparatus 112 in such a way as to stop the tactile feedback.

In step S107, the recognition section 221 of the information processing apparatus 111 determines whether or not the design work has been completed. If it is determined that the design work has not been completed, the process returns to step S102.

Thereafter, the processing in steps S102 to S107 is repeatedly performed until it is determined in step S107 that the design work has been completed.

If it is determined in step S107 that the design work has been completed, on the other hand, the process for controlling contact situation feedback ends.

### <Specific Example of Contact Situation Feedback>

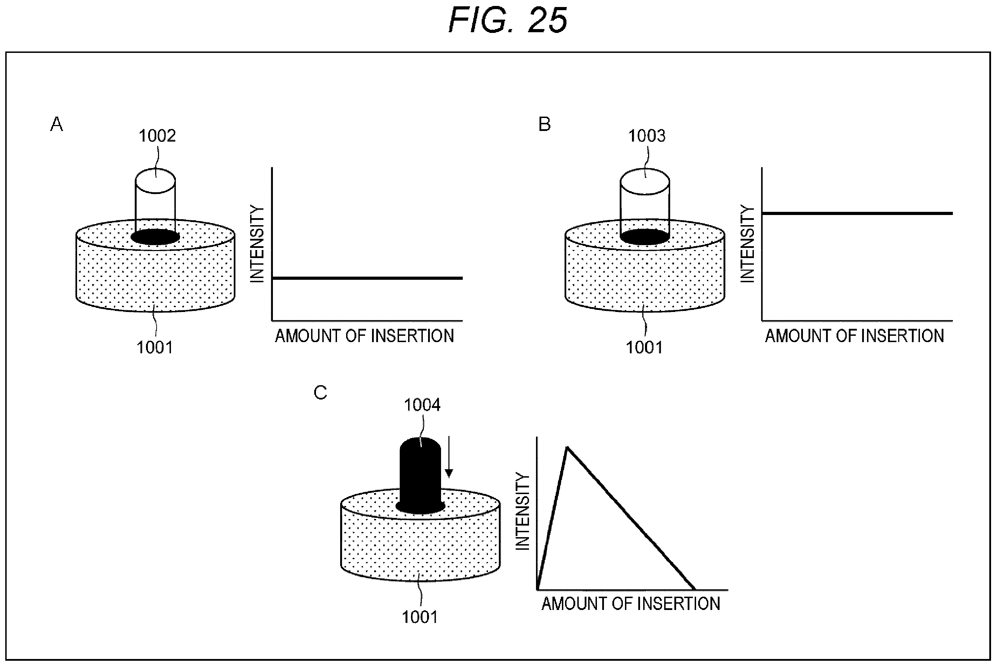

Next, a specific example of the contact situation feedback will be described with reference to Figs. 25 to 31.

Fig. 25 illustrates examples of contact situation feedback in a case where an operation target component is fitted to another component.

A to C of Fig. 25 illustrate examples of the contact situation feedback in a case where components 1002 to 1004 are inserted into an opening at a center of a component 1001. Graphs in A to C of Fig. 25 illustrate characteristics of the tactile feedback. Horizontal axes of the graphs represent the amount of insertion of the components 1002 to 1004, and vertical axes of the graphs represent intensity (magnitude) of a tactile stimulus presented through the tactile feedback.

Note that a type of tactile stimulus presented through the tactile feedback is not particularly limited, and for example, vibration, pressure, a sense of force, and the like are assumed. In a case where the tactile stimulus is vibration, the intensity of the tactile stimulus is represented by, for example, amplitude of the vibration. In a case where the tactile stimulus is pressure, the intensity of the tactile stimulus is represented by, for example, magnitude of the pressure. The same applies to the following examples of the tactile feedback unless otherwise specified.

For example, the component 1001 includes a resin. For example, the component 1002 and the component 1003 include the same resin. Note that the same material or different materials may be used for the component 1001, the component 1002, and the component 1003. For the component 1004, a material having more elasticity than the material of the component 1002 and the component 1003, such as rubber, is used. A diameter of the component 1002 is smaller than that of the component 1003 and is substantially the same as that of the component 1004.

As illustrated in A of Fig. 25, in a case where the component 1002 is inserted into the component 1001, the intensity of the tactile stimulus is constant regardless of the amount of insertion of the component 1002. This indicates that, for example, substantially the same force is required in a case where the component 1002 is inserted into the component 1001.

As illustrated in B of Fig. 25, in a case where the component 1003 is inserted into the component 1001, too, the intensity of the tactile stimulus is constant regardless of the amount of insertion of the component 1003. The intensity of the tactile stimulus, however, is larger than that in the example of A of Fig. 25. This indicates that a larger force is required to insert the component 1003 into the component 1001 since the diameter of the component 1003 is larger than that of component 1002.

As illustrated in C of Fig. 25, in a case where the component 1004 is inserted into component 1001, the intensity of the tactile stimulus is maximized at a beginning of the insertion, and then decreases linearly as the amount of insertion increases. As a result, the elastic rubber component 1004 receives the largest force at a time of the insertion, and then a sensation of smooth insertion is exhibited.

Note that at least one of auditory feedback or visual feedback may be presented together with, or instead of, the tactile feedback. For example, the auditory feedback may be presented in accordance with the tactile feedback as a sound having a volume corresponding to the intensity of the tactile stimulus.

As a result, the user can intuitively recognize a fitting state of an operation target component with respect to another component.

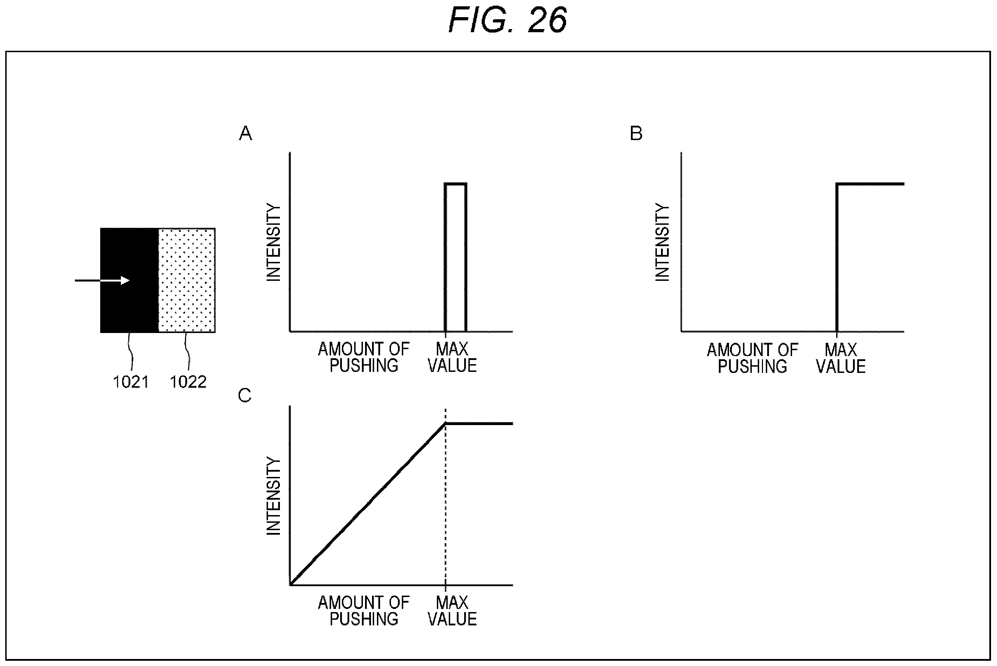

Fig. 26 illustrates examples of contact situation feedback in a case where an operation target component is pushed into another component.

A to C of Fig. 26 illustrate examples of contact situation feedback in a case where a component 1021 having elasticity and a limited amount of crushing, such as rubber, is pushed into a hard component 1022 such as metal. Graphs in A to C of Fig. 26 illustrate characteristics of the tactile feedback. Horizontal axes of the graphs represent the amount of pushing, and vertical axes represent intensity of a tactile stimulus presented through the tactile feedback.

In the example in A of Fig. 26, a pulsed tactile stimulus is presented when the amount of pushing of the component 1021 reaches a limit (MAX value).

In the example in B of Fig. 26, a tactile stimulus of a constant level of intensity is continuously presented after the amount of pushing of the component 1021 reaches the limit (MAX value).

In the example in C of Fig. 26, intensity of a tactile stimulus linearly increases until the amount of pushing of the component 1021 reaches the limit (MAX value), and after the amount of pushing of the component 1021 reaches the limit (MAX value), a tactile stimulus of a constant level of intensity is continuously presented.

Note that at least one of auditory feedback or visual feedback may be presented together with, or instead of, the tactile feedback. For example, the auditory feedback may be presented in accordance with the tactile feedback as a sound having a volume corresponding to the intensity of the tactile stimulus.

As a result, the user can intuitively recognize a sensation of pushing the operation target component into another component and a limit of the amount of pushing.

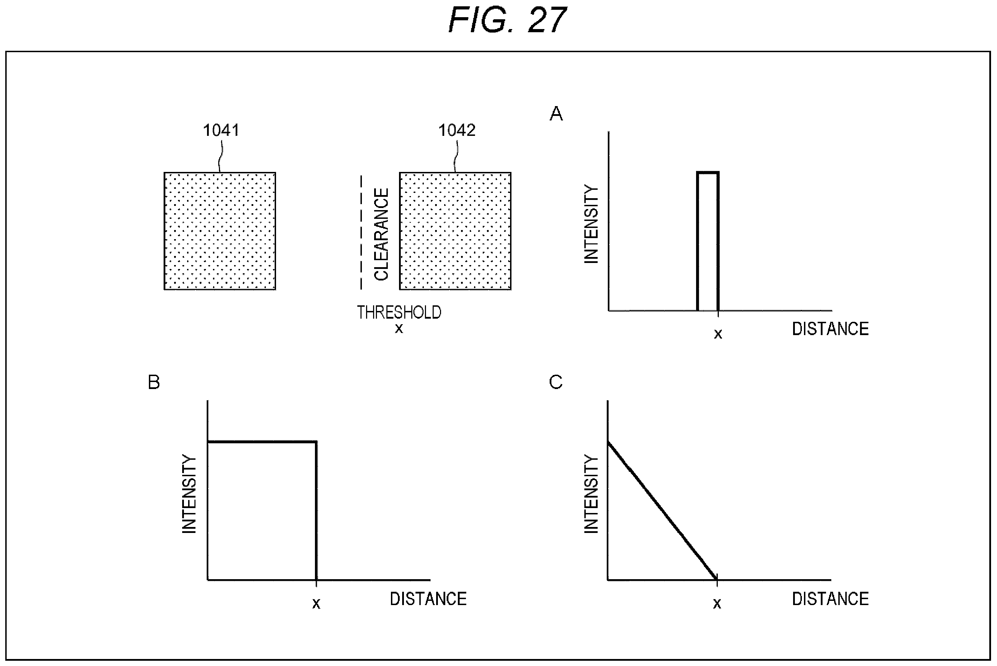

Fig. 27 illustrates examples of contact situation feedback in a case where an operation target component is brought close to another component.

Specifically, A to C of Fig. 27 illustrate examples of the contact situation feedback presented in a case where a component 1041 is brought close to a component 1042. Graphs in A to C of Fig. 27 illustrate characteristics of the tactile feedback. Horizontal axes of the graphs represent a distance between the component 1041 and the component 1042, and vertical axes of the graphs represent intensity of a tactile stimulus presented through the tactile feedback.

In the example in A of Fig. 27, a pulsed tactile stimulus is presented when the distance between the component 1041 and the component 1042 reaches a threshold x and the component 1041 enters a clearance of the component 1042.

In the example in B of Fig. 27, a tactile stimulus of a constant level of intensity is continuously presented after the distance between the component 1041 and the component 1042 becomes smaller than or equal to the threshold x and the component 1041 enters the clearance of the component 1042.

In the example in C of Fig. 27, presentation of a tactile stimulus is initiated when the distance between the component 1041 and the component 1042 becomes smaller than or equal to the threshold x and the component 1041 enters the clearance of the component 1042, and intensity of the tactile stimulus increases as the component 1041 approaches the component 1042.

Note that at least one of auditory feedback or visual feedback may be presented together with, or instead of, the tactile feedback. For example, the auditory feedback may be presented in accordance with the tactile feedback as a sound having a volume corresponding to the intensity of the tactile stimulus.

As a result, the user can intuitively recognize that the component 1041 has entered the clearance of the component 1042.

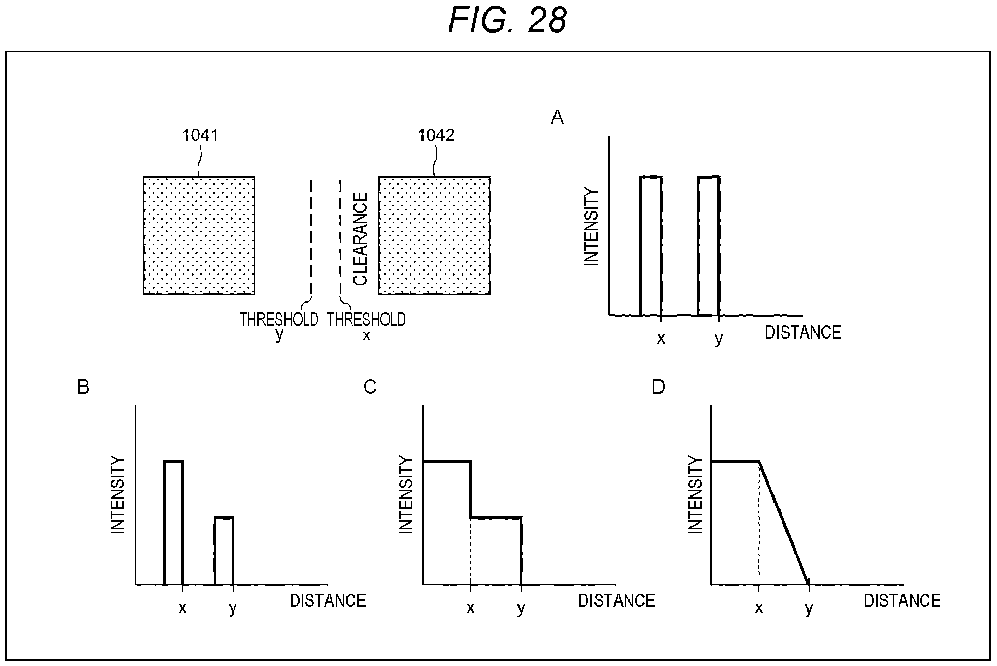

Similarly to Fig. 27, Fig. 28 illustrates examples of contact situation feedback in a case where the clearance of the other component is notified of when the operation target component is brought close to the other component.

Note that, in this example, a threshold y is set outside the clearance of the component 1042.

In the example in A of Fig. 28, a pulsed tactile stimulus is presented when the distance between the component 1041 and the component 1042 reaches the threshold y and when the distance between the component 1041 and the component 1042 reaches the threshold x and the component 1041 enters the clearance of the component 1042. Intensities of these tactile stimuli are similar to each other.

In the example in B of Fig. 28, as in the example in A of Fig. 28, a pulsed tactile stimulus is presented when the distance between the component 1041 and the component 1042 reaches the threshold y and when the distance between the component 1041 and the component 1042 reaches the threshold x and the component 1041 enters the clearance of the component 1042. The intensity of the tactile stimulus, on the other hand, is higher when the distance between the component 1041 and the component 1042 reaches the threshold x than when the distance reaches the threshold y.

In the example in C of Fig. 28, a tactile stimulus of a constant level of intensity is continuously presented within a range where the distance between the component 1041 and the component 1042 is from the threshold y to the threshold x. If the distance between the component 1041 and the component 1042 is smaller than or equal to the threshold x and the component 1041 is within the clearance of the component 1042, a tactile stimulus of a constant level of intensity higher than within the range from the threshold y to the threshold x is continuously presented.

In the example in D of Fig. 28, presentation of a tactile stimulus is initiated when the distance between component 1041 and component 1042 reaches the threshold y, and then intensity of the tactile stimulus increases linearly as the component 1041 approaches the component 1042. Thereafter, when the distance between the component 1041 and the component 1042 reaches the threshold x, the increase in the intensity of the tactile stimulus is stopped and a tactile stimulus of a constant level of intensity is continuously presented while the component 1041 is within the clearance of the component 1042.

Note that at least one of auditory feedback or visual feedback may be presented together with, or instead of, the tactile feedback. For example, the auditory feedback may be presented in accordance with the tactile feedback as a sound having a volume corresponding to the intensity of the tactile stimulus.

As a result, the user can intuitively recognize that the component 1041 has approached the clearance of the component 1042 and that the component 1041 has entered the clearance of the component 1042.

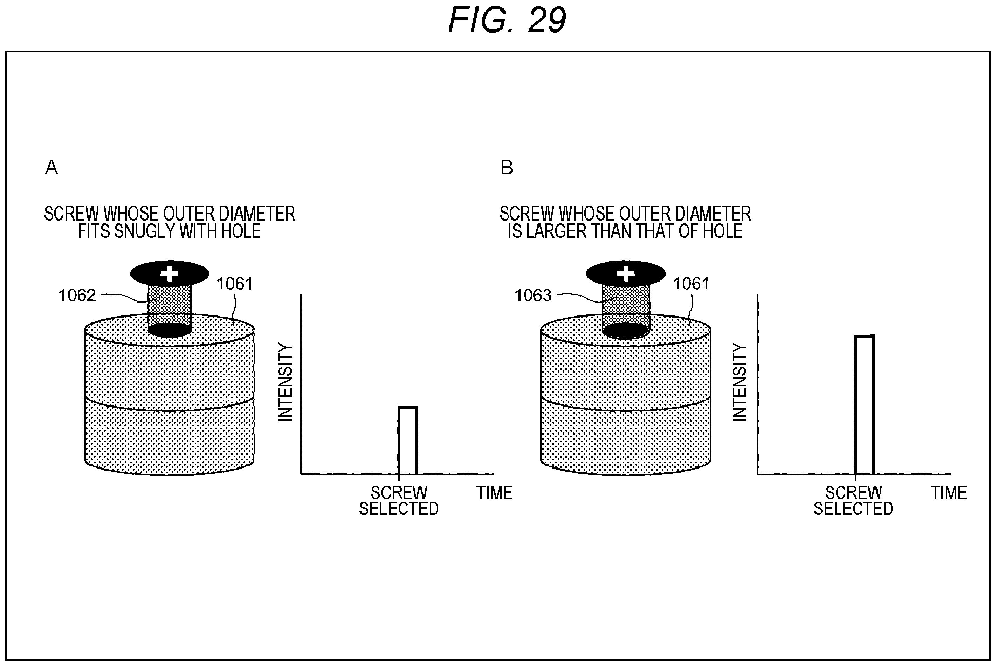

Fig. 29 illustrates examples of contact situation feedback in a case where an operation target component is screwed to another component.

A and B of Fig. 29 illustrate examples of contact situation feedback in a case where a screw 1062 and a screw 1063 are screwed to a component 1061. Graphs in A and B of Fig. 29 illustrate characteristics of tactile feedback. Horizontal axes of the graphs represent time, and vertical axes of the graphs represent intensity of a tactile stimulus presented through the tactile feedback.

A of Fig. 29 illustrates an example of tactile feedback presented in a case where the screw 1062, which fits an outer diameter of a threaded hole in the component 1061, has been selected.

B of Fig. 29 illustrates an example of tactile feedback presented when the screw 1062 having a larger outer diameter than the threaded hole in the component 1061 has been selected.

In the example in B of Fig. 29, the intensity of the tactile stimulus is higher than that in the example in A of Fig. 29.

Note that at least one of auditory feedback or visual feedback may be presented together with, or instead of, the tactile feedback. For example, the auditory feedback may be presented in accordance with the tactile feedback as a sound having a volume corresponding to the intensity of the tactile stimulus.

As a result, the user can intuitively recognize, at a time of selection of a screw, a degree of fitting of the screw (a degree of matching of size) to a component to be screwed.

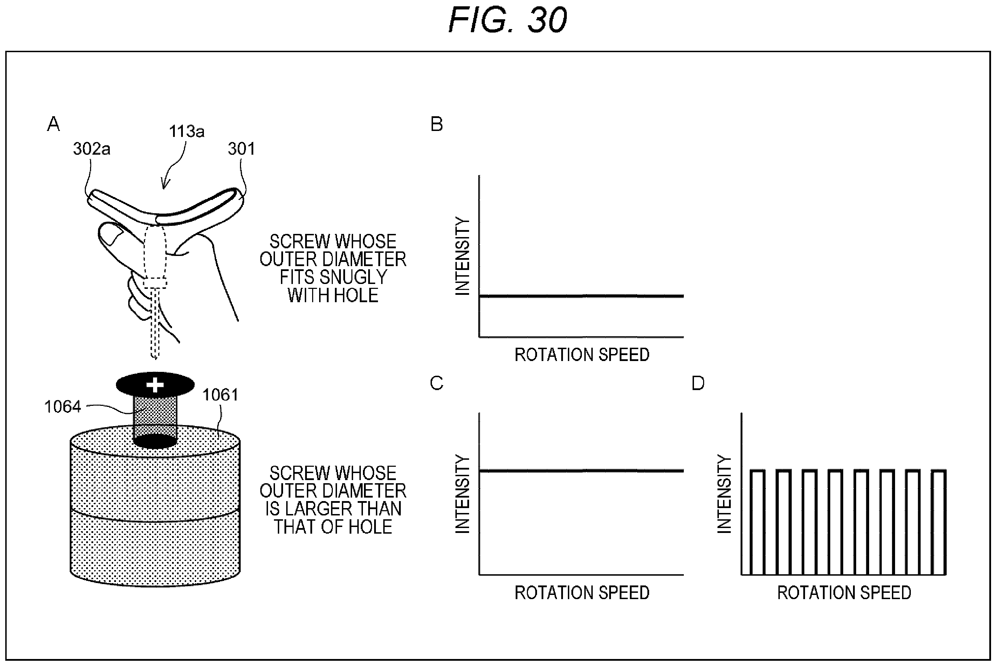

Fig. 30 illustrates examples of contact situation feedback in a case where an operation target component is screwed to another component using the controller device 113a.

For example, as illustrated in A of Fig. 30, the user holds the operation portion 302a (or the holding portion 302b) of the controller device 113a by hand and rotates the operation portion 302a to virtually screw a screw 1064 to the component 1061.

Graphs in B to D of Fig. 30 illustrate characteristics of intensity of a tactile stimulus presented through tactile feedback with respect to rotation of the controller device 113a in a case where the screw 1064 is screwed to the component 1061 using the controller device 113a. Horizontal axes of the graphs represent rotation speed of the controller device 113a, and vertical axes represent the intensity of the tactile stimulus.

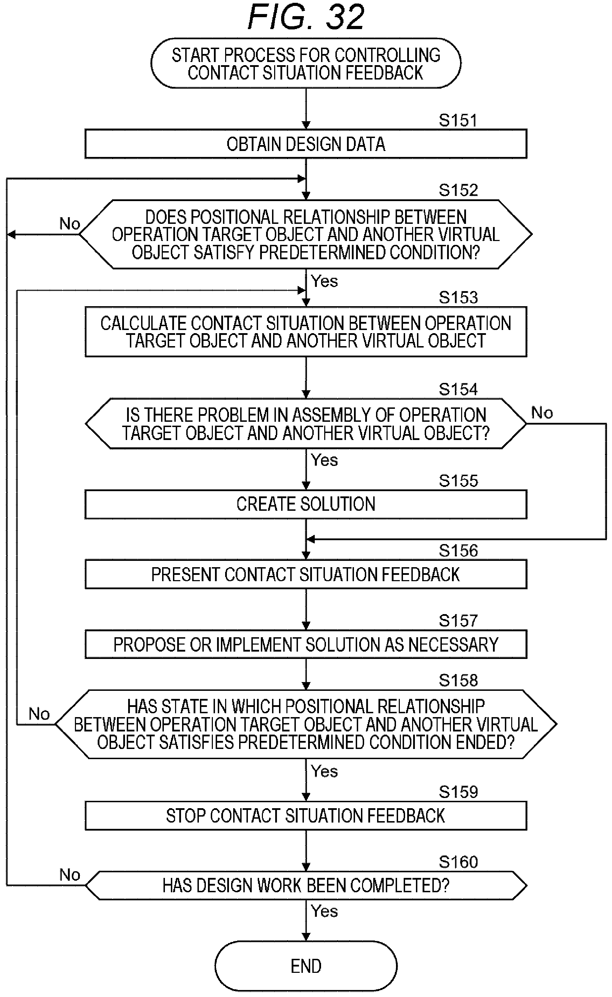

B of Fig. 30 illustrates characteristics of tactile feedback in a case where an outer diameter of the screw 1064 fits snugly with the threaded hole in the component 1061. C and D of Fig. 32 illustrate examples of characteristics of tactile feedback in a case where the outer diameter of the screw 1064 is larger than the threaded hole in the component 1061.

In the examples in B and C of Fig. 30, the intensity of the tactile stimulus is maintained constant. In the example in C of Fig. 32, on the other hand, the intensity of the tactile stimulus is higher than that in the example in B of Fig. 32.

Furthermore, for example, as illustrated in D of Fig. 32, in a case where the outer diameter of the screw 1064 is larger than the threaded hole in the component 1061, the intensity of the tactile stimulus may oscillate in accordance with the rotation of the controller device 113a.

Note that, for example, a relationship between the outer diameter of the screw 1064 and the diameter of the threaded hole in the component 1061 may be presented through visual feedback in addition to the tactile feedback. For example, in a case where the outer diameter of the screw 1064 is larger than the threaded hole in the component 1061, a display mode of the screw 1064 may change, and the screw 1064 may be highlighted so as to be conspicuous.

As a result, the user can intuitively recognize the relationship between the outer diameter of the screw 1064 and the diameter of the threaded hole in the component 1061 and a force required for screwing.

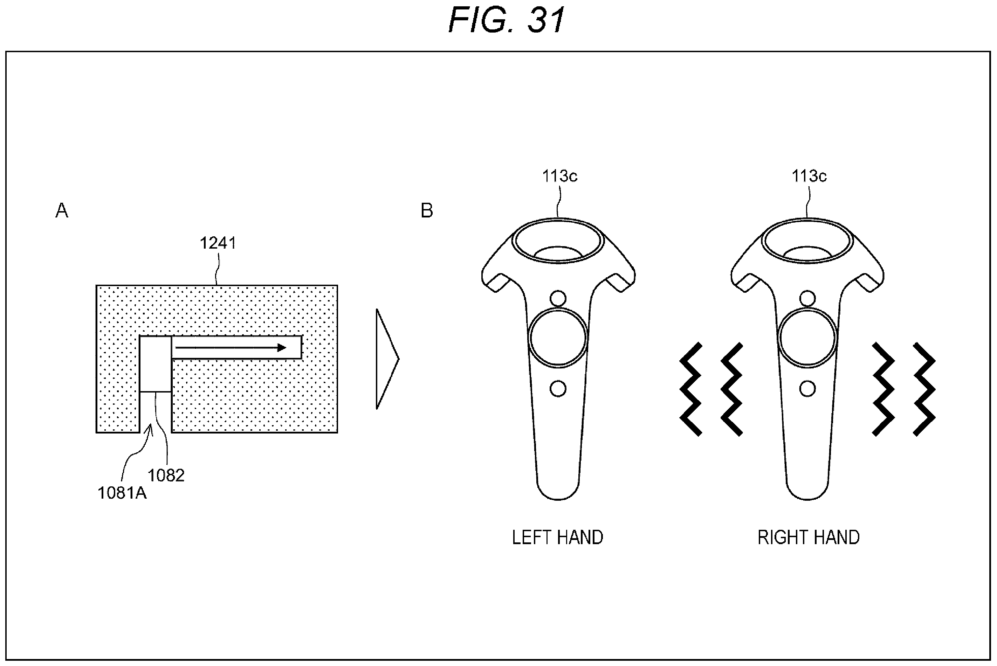

Fig. 31 illustrates an example of contact situation feedback in a case where an operation target component interferes with another component and cannot be incorporated.

A of Fig. 31 illustrates a state in which a component 1082 is about to be inserted into an inverted L-shaped groove 1081A in a component 1081. Here, an example is illustrated in which a right side of the component 1082 comes into contact with a wall of the groove 1081A at a bent portion of the groove 1081A, and the component 1082 cannot be inserted deep into the groove 1081A.

Furthermore, for example, as illustrated in B of Fig. 31, the user holds controller devices 113c, which are examples of the controller device 113, in both hands. In this case, for example, only the controller device 113c held in the right hand vibrates through tactile feedback.

As a result, a direction in which, or a position at which, the component 1082 interferes with the component 1081 is indicated. The user can then intuitively recognize that the right side of the component 1082 is in contact with the wall of the groove 1081A of the component 1081 and the component 1082 cannot be inserted.

Note that, for example, a direction in which, or a position at which, the component 1082 does not interfere with the component 1081 may be indicated through tactile feedback.

Note that this tactile feedback may be presented each time a situation occurs in which a contact target component interferes with another component and cannot be incorporated, or may be presented in a case where any user operation is performed or the user gives an instruction to the XR system 101 to feed back a contact direction.

Note that, for example, in a case where the controller device 113c includes a plurality of vibration devices, it is possible to indicate a contact direction of an operation target component other than the left and the right by selecting a vibration device to vibrate.

Furthermore, for example, in a case where the user operates the controller device 113 including only one vibration device with one of his/her hands, a contact direction of an operation target component may be indicated by intensity, the number, a pattern, a frequency, or the like of vibration.

Here, an example of a method for indicating front, rear, left, and right directions using the controller device 113a in a case where the user holds the controller device 113a forward with his/her right hand will be described with reference to Fig. 14 described above.

For example, in a case where the front direction is indicated, the front tactile device 372a vibrates. For example, in a case where a right direction is indicated, the front tactile device 372a and the central tactile device 371 vibrate. For example, in a case where a left direction is indicated, the central tactile device 371 and the rear tactile device 372b vibrate. For example, in a case where a rear direction is indicated, the rear tactile device 372b vibrates.

### <Second Embodiment of Process for Controlling Contact Situation Feedback>

Next, a second embodiment of the process for controlling contact situation feedback performed by the XR system 101 will be described with reference to a flowchart of Fig. 32.

The second embodiment is different from the first embodiment in that a solution is created, proposed, or implemented in a case where there is a problem in assembly of an operation target object and another virtual object.

In steps S151 to S153, processing similar to that in steps S101 to S103 in Fig. 24 is performed.

In step S154, the space control section 223 of the information processing apparatus 111 determines whether or not there is a problem in assembly of an operation target object and another virtual object on the basis of a result of the processing in step S153.

The problem in the assembly of an operation target object and another virtual object is assumed to be, for example, a case where the operation target object and the another virtual object cannot be assembled together as designed due to interference between the operation target object and the another virtual object, incompatibility of characteristics (for example, shape, size, material, strength, or the like) between the operation target object and the another virtual object, or the like.

If it is determined that there is a problem in the assembly of the operation target object and the another virtual object, the processing proceeds to step S155.

In step S155, the space control section 223 of the information processing apparatus 111 creates a solution. For example, the space control section 223 creates a solution in which the operation target component and the another virtual object can be assembled together as designed on the basis of design data regarding the operation target object, design data regarding the another virtual object, and the like. For example, a solution indicating at least one of a change in a characteristic (for example, shape, size, material, or the like) or a change in a position of at least one of the operation target object or the another virtual object, or an amount of interference allowed between the two is created.

Thereafter, the process proceeds to step S156.

If it is determined in step S154, on the other hand, that there is no problem in the assembly of the operation target object and the another virtual object, the process proceeds to step S156 while skipping processing in step S155.

In step S156, contact situation feedback is presented as in the processing in step S104 in Fig. 24.

In step S157, the XR system 101 proposes or implements the solution as necessary.

For example, the space control section 223 of the information processing apparatus 111 controls the display unit 254 of the terminal apparatus 112 in such a way as to propose or implement the solution created in the processing in step S155 using visual information. Here, the implementation of the solution refers to, for example, changing a characteristic, a position, or the like of a virtual object in the XR space in accordance with the solution.

For example, the audio control section 224 of the information processing apparatus 111 controls the audio output unit 255 of the terminal apparatus 112 in such a way as to suggest the solution created in the processing in step S155 using auditory information.

For example, the tactile presentation control section 225 of the information processing apparatus 111 controls the controller device 113 via the terminal apparatus 112 in such a way as to propose the solution created in the processing in step S155 using tactile information.

In step S158, as in the processing in step S105 in Fig. 24, it is determined whether or not the state in which the positional relationship between the operation target object and the another virtual object satisfies the predetermined condition has ended. If it is determined that the state in which the positional relationship between the operation target object and the another virtual object satisfies the predetermined condition still continues, the process returns to step S153.

Thereafter, the processing in steps S153 to S158 is repeatedly performed until it is determined in step S158 that the state in which the positional relationship between the operation target object and the another virtual object satisfies the predetermined condition has ended.

If it is determined in step S158, on the other hand, that the state in which the positional relationship between the operation target object and the other virtual object satisfies the predetermined condition has ended, the process proceeds to step S159.

In step S159, as in the processing in step S106 in Fig. 24, the contact situation feedback is stopped.

In step S160, as in the processing in step S107 in Fig. 24, it is determined whether or not the design work has been completed. If it is determined that the design work has not been completed, the process returns to step S152.

Thereafter, the processing in steps S152 to S160 is repeatedly performed until it is determined in step S160 that the design work has been completed.

If it is determined in step S160 that the design work has been completed, on the other hand, the process for controlling contact situation feedback ends.

### <Specific Examples of Method for Proposing or Implementing Solution>

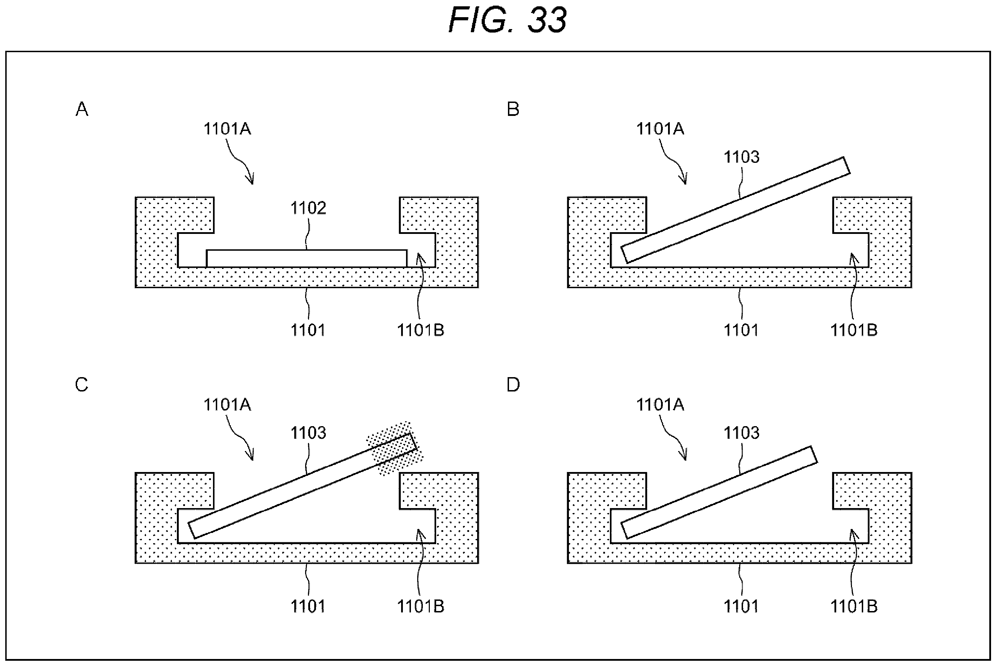

Next, specific examples of a method for proposing or implementing a solution will be described with reference to Figs. 33 to 41.

Fig. 33 illustrates an example of a solution in a case where an operation target component is incorporated into another component.

A of Fig. 33 illustrates a completed form of an object. That is, a plate-shaped component 1102 is incorporated in a groove 1101B in a component 1101. The groove 1101B is wider inside than at an opening 1101A.

For example, as illustrated in B of Fig. 33, in a case where a plate-shaped component 1103 having a width wider than the opening 1101A is incorporated into the groove 1101B, even if a left end of the component 1103 is pushed into a left end of the groove 1101B, the component 1103 cannot be incorporated into the groove 1101B.

In this case, for example, by cutting a right-end portion 1103A of the component 1103 indicated by a dot pattern in C of Fig. 33, the component 1103 can be incorporated in the groove 1101B.

In this case, for example, as illustrated in D of Fig. 33, the component 1103 is displayed with a right end of the component 1103 cut such that width of the component 1103 becomes small enough that the component 1103 can be incorporated in the groove 1101B.

As a result, for example, the user can grasp how much the component 1103 needs to be scraped to be incorporated into the groove 1101B.

Note that, for example, when the component 1101 and the component 1103 come into contact with each other, multisensory feedback including tactile feedback representing a sense of contact may be presented.

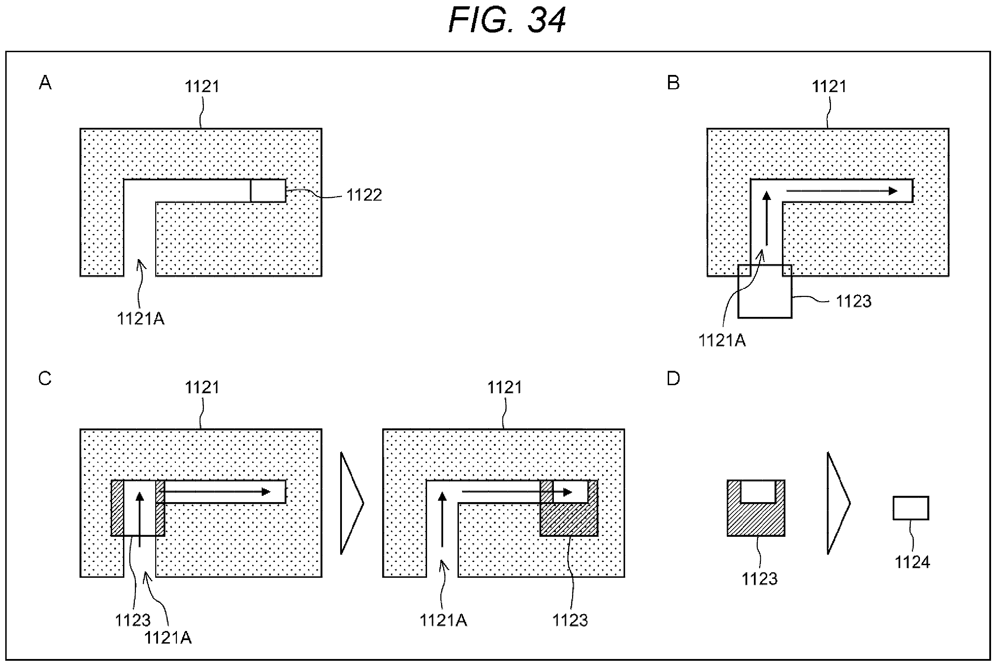

Fig. 34 illustrates an example of a solution in a case where an operation target component is inserted into another component.

For example, A of Fig. 34 illustrates a completed form of an object. A component 1122 having a rectangular cross section is inserted into a depth of an inverse L-shaped groove 1121A in a component 1121.

For example, as illustrated in B of Fig. 34, in a case where a component 1123 having a rectangular cross section is about to be inserted into the groove 1121A, the component 1123 cannot be inserted into the groove 1121A because width of the component 1123 is larger than width of the groove 1121A.

In this case, as illustrated in C of Fig. 34, in a case where the component 1123 is inserted into the groove 1121A, a portion of the component 1123 where the component 1123 is in contact with the component 1121 is visually presented by changing a display mode of the contact portion of the component 1123.

Furthermore, for example, as illustrated in D of Fig. 34, in a case where a predetermined operation is performed in a state where the contact portion of the component 1123 is presented, the contact portion of the component 1123 is scraped.

Note that, for example, as illustrated in C of Fig. 34, in a case where the component 1123 is inserted into the groove 1121A, a portion of the component 1123 where the component 1123 is in contact with the component 1121 may be automatically scraped.

Note that, for example, when the component 1121 and the component 1123 come into contact with each other, multisensory feedback including tactile feedback representing a sense of contact may be presented.

As a result, for example, the user can grasp a sense of how much the component 1123 needs to be scraped to be inserted into the groove 1121A.

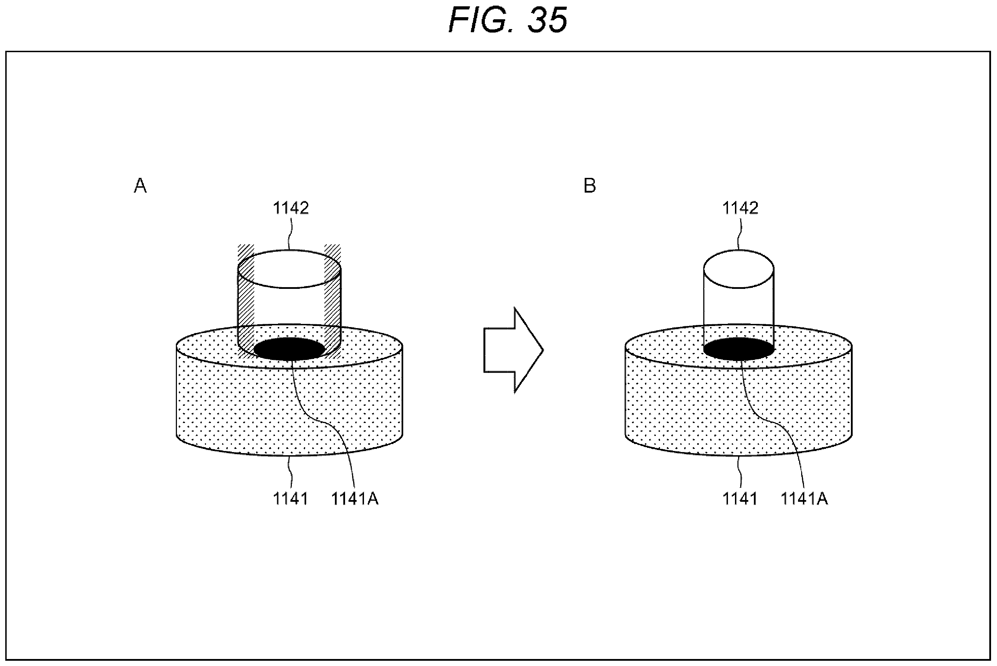

Fig. 35 illustrates an example of a solution in a case where an operation target component is inserted into another component.

For example, as illustrated in A of Fig. 35, in a case where a component 1142 is inserted into a hole 1141A in a component 1141 and a diameter of the component 1142 is larger than a diameter of the hole 1141A, a portion of the components 1142 that needs to be scraped is presented.

Further, for example, as illustrated in B of Fig. 35, the component 1142 is automatically scraped so as to be inserted into the hole 1141A.

As a result, for example, the user can grasp a sense of how much the component 1142 needs to be scraped to be inserted into the hole 1141A.

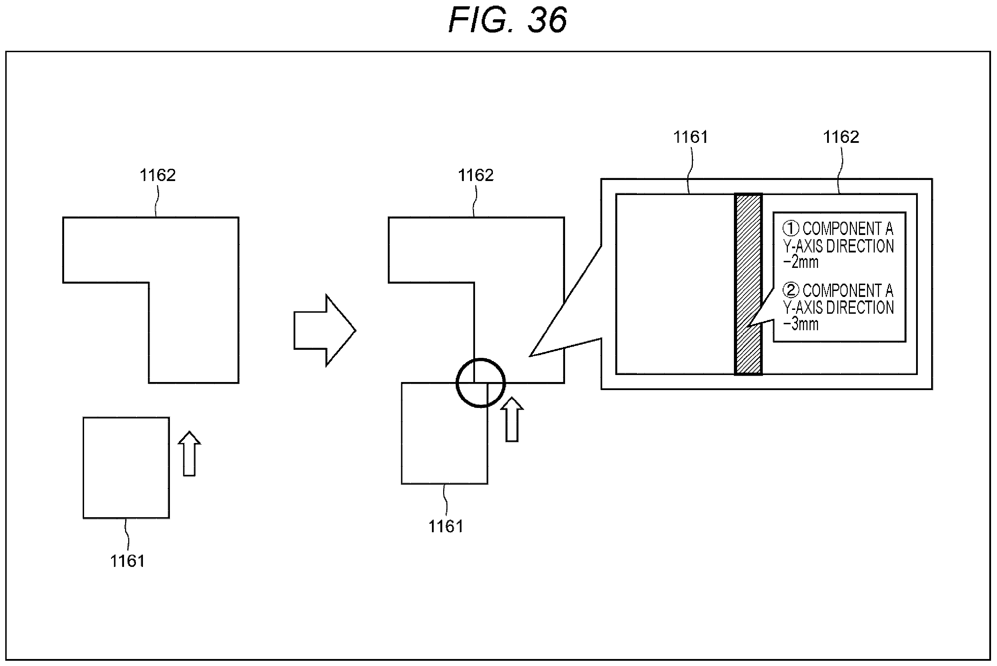

Fig. 36 illustrates an example of a solution in a case where an operation target component and another component interfere with each other.

For example, if a right end of a component 1161 (component A) collides and interferes with a component 1162 in a case where the component 1161 is moved toward the component 1162, an acceptable interference distance (hereinafter required to as an allowable amount of interference) is presented.

In this example, two options are presented as the allowable amount of interference.

As a first option, an allowable amount of interference of -2 mm in a Y-axis direction (a lateral direction in the figure) is presented. That is, it is proposed that the right end of the component 1161 may interfere with the component 1162 by 2 mm in the Y-axis direction. Here, the allowable amount of interference is set to be small in consideration of friction between the components.

As a second option, an allowable amount of interference of -3 mm in the Y-axis direction (the lateral direction in the figure) is presented. That is, it is proposed that the right end of the component 1161 may interfere with the component 1162 by 3 mm in the Y-axis direction. Here, the allowable amount of interference is set to be large without considering friction between the components.

As a result, the user can recognize the allowable amount of interference and select a more appropriate allowable amount of interference in accordance with an application or the like.

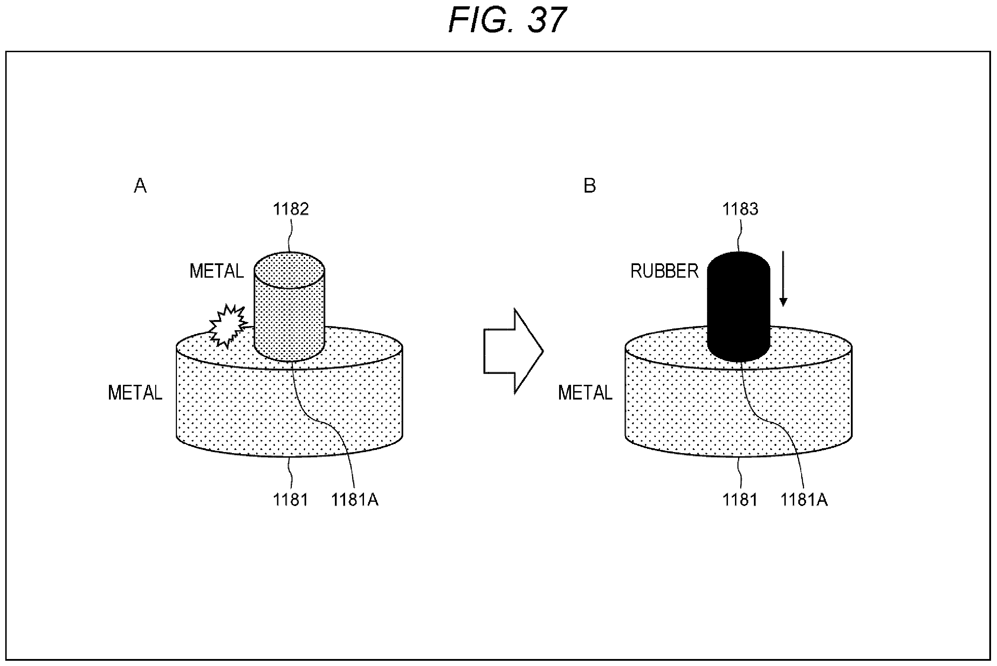

Fig. 37 illustrates an example of proposal of replacement of a component.

For example, as illustrated in A of Fig. 37, in a case where a metal component 1182 cannot be inserted into a hole 1181A in another metal component 1181, it is proposed that a rubber component 1183 having the same size can be inserted as illustrated in B of Fig. 37 if the user replaces the metal component 1182 with the rubber component 1183.

Note that, for example, in a case where a plurality of types of rubber components can be proposed, differences in elasticity, price, and the like may be presented together with the plurality of substitute components, and the user may be allowed to select one of the plurality of substitute components.

Furthermore, in a case where another material is presented, data learned so far may be used. That is, a component including a substitutable material may be proposed on the basis of data obtained through a learning process.

As a result, the user can easily know a component including a material that can be inserted into the hole 1181A in the component 1181.

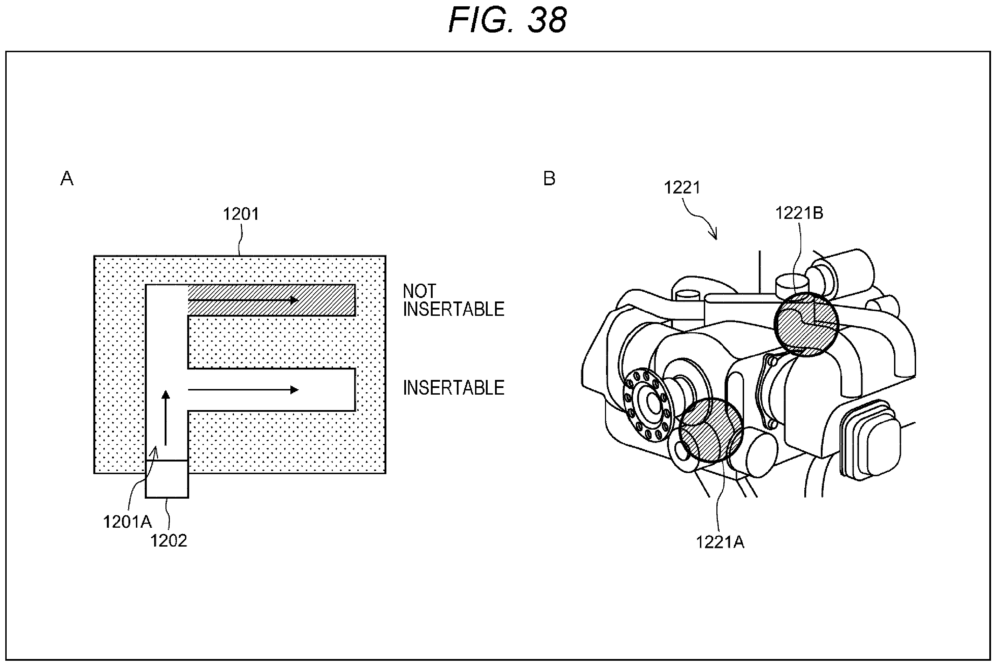

Fig. 38 illustrates an example of presentation of a direction in which, or a position at which, an operation target component can be inserted into another component without interfering with the another component.

For example, A of Fig. 38 illustrates an example in which, in a case where a component 1202 is inserted into a groove 1201A in a component 1201, a path through which the component 1202 cannot be inserted is highlighted. A path in the groove 1201A indicated by hatching does not allow insertion of the component 1201, and another path allows insertion of the component 1201.

Note that, for example, a path through which the component 1202 can be inserted may be highlighted.

Furthermore, for example, the path through which the component 1202 can be inserted may be visually presented by automatically moving the component 1202 to a position at which the component 1202 can be inserted. Furthermore, a direction in which the component can be inserted may be presented through tactile feedback by a method similar to that described above with reference to Fig. 31.

For example, as illustrated in B of Fig. 38, positions 1221A and 1221B at which the component can be inserted may be visually presented in an entire view of an object 1221.

As described above, the user can easily recognize a direction in which, or a position at which, a component can be assembled (for example, inserted) and a direction in which, or a position at which, a component cannot be assembled.

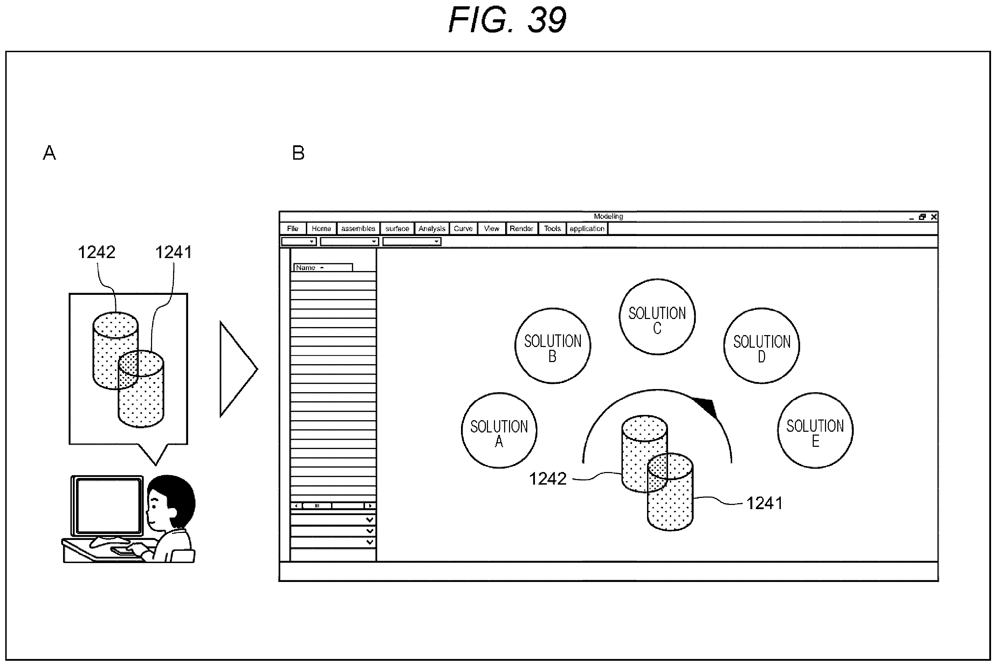

Fig. 39 illustrates an example of a method for presenting a solution.

For example, in a case where there is a plurality of solutions, the plurality of solutions may be presented to the user, and the user may be allowed to select one of the plurality of solutions.

Specifically, as illustrated in A of Fig. 39, in a case where components 1241 and 1242 interfere with each other while the user is checking assembly of the components 1241 and 1242, solutions A to E are presented as illustrated in B of Fig. 39.

The user can then select a desired solution to implement the solution.

Note that if there is only one solution, for example, the solution may be immediately implemented without being presented.

Furthermore, for example, a plurality of solutions may be sequentially implemented, and results of the implementation may be presented to the user.

### <Method for Improving Visibility>

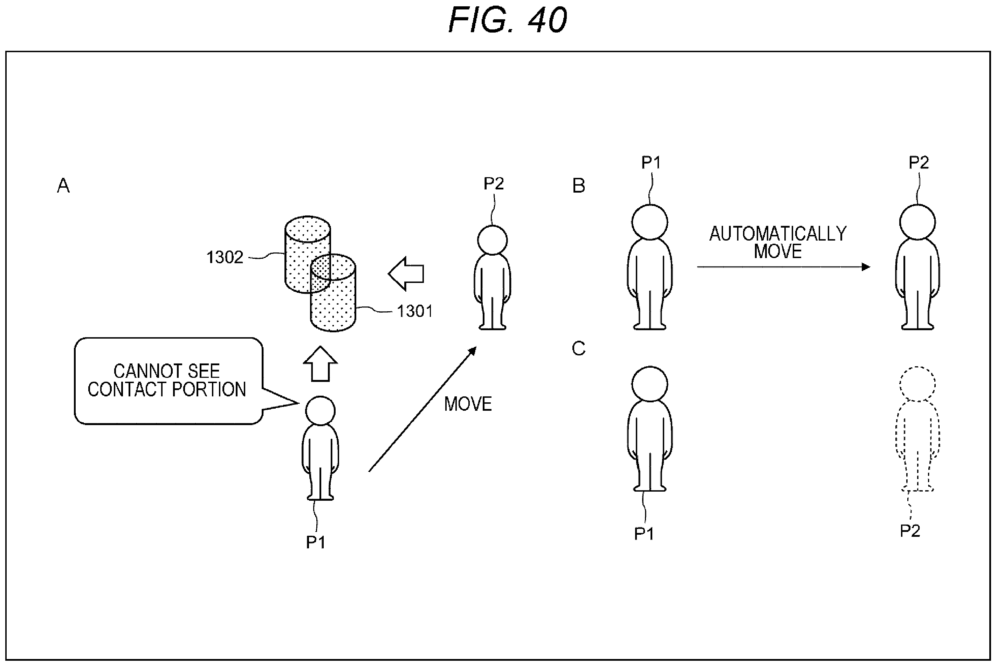

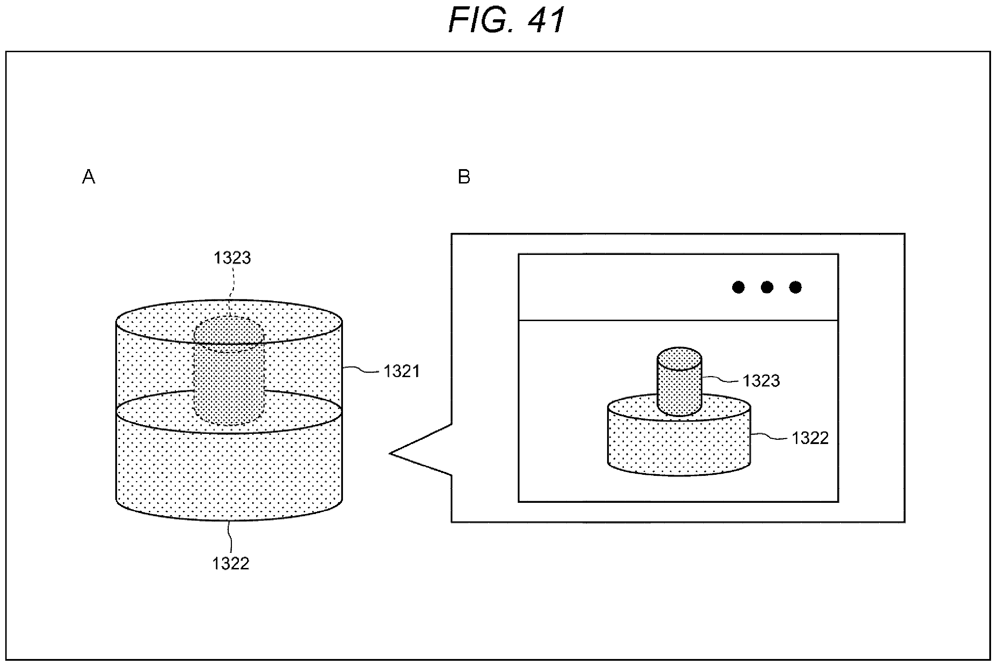

Next, examples of a method for improving visibility of assembly of components will be described with reference to Figs. 40 and 41.

For example, in a case where three-dimensional CAD is used, it might be difficult to check or correct contact between components depending on a position of the user's point of view.

For example, as illustrated in A of Fig. 40, in a case where a component 1301 and a component 1302 are in contact with each other and the user's point of view is set at a position P1, it is difficult to check or correct a contact portion between the component 1301 and the component 1302. If the user's point of view moves to a position P2, on the other hand, visibility for the contact portion between the component 1301 and the component 1302 improves, and the user can easily check or correct the contact portion.

In this case, for example, as illustrated in B of Fig. 40, the user's point of view may be automatically moved from the position P1 to the position P2.

In a case where the user's point of view is automatically moved, however, there is a possibility that the user experiences VR sickness or the user does not know where he/she has moved.

As illustrated in C of Fig. 40, on the other hand, for example, the position P2, which is a candidate for a movement destination of the user's point of view, may be presented, and the movement of the point of view may be proposed.

For example, there is a case where it is difficult to check a contact situation of components due to, for example, the user's field of view being blocked by another component. In response to this, a state in which components around the components in contact with each other are removed, for example, may be presented to the user.

For example, A of Fig. 41 illustrates an example in which a component 1322 and a component 1323 interfere with each other inside a component 1321, and the component 1323 cannot be inserted into the component 1322.

In this case, for example, as illustrated in B of Fig. 41, the component 1231 may be erased or moved to present, to the user, a state in which a contact portion between the component 1232 and the component 1233 is exposed.

In this case, for example, a screen in B of Fig. 41 may be presented by erasing or moving the component 1231 on the same screen as in A of Fig. 41. Furthermore, for example, the screen in B of Fig. 41 may be presented on a screen different from that in A of Fig. 41 (for example, a different window).

### <Process for Learning Design Data>

For example, in a case where an object designed using three-dimensional CAD is actually generated (for example, prototyped or manufactured), the object might not be generated as designed. For example, components might not be assembled together (for example, cannot be inserted or fitted), or components might unintendedly interfere with each other.

In response to this, design accuracy of the three-dimensional CAD may be improved, for example, by performing a learning process on the basis of the actually generated object and updating design data of the three-dimensional CAD.

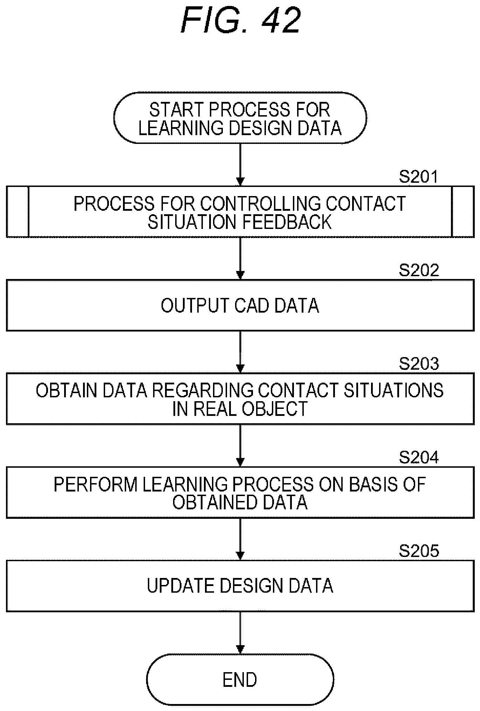

Here, a process for learning design data performed by the XR system 101 will be described with reference to a flowchart of Fig. 42.

In step S201, the process for controlling contact situation feedback described above with reference to Fig. 24 or 32 is performed.

In step S202, the space control section 223 outputs CAD data. That is, the space control section 223 outputs data (CAD data) regarding an object designed using three-dimensional CAD to the outside.

In response to this, for example, the user generates (for example, prototypes or manufactures) a real object in the real world on the basis of (a virtual object of) the CAD data.

In step S203, the information processing apparatus 111 obtains data regarding contact situations between components of the real object.

For example, the user examines the contact situations between the components of the real object, generates data indicating a result of the examination as learning data, and inputs the learning data via the operation input unit 201 of the information processing apparatus 111.

For example, the learning data includes data indicating portions of the real object in which contact situations between components are as designed and portions of the real object in which contact situations between components are different from those in design. For example, the learning data includes data indicating specific differences and situations for the portions where contact situations between components are different from those in the design. The data indicating specific differences and situations includes, for example, possibility of assembly of components, such as insertion and fitting, the amount of interference between components, and the like.

The learning section 226 of the information processing apparatus 111, on the other hand, obtains the learning data from the operation input unit 201 and stores the learning data in the storage unit 204.

In step S204, the learning section 226 of the information processing apparatus 111 performs a learning process on the basis of the obtained data.

For example, the learning section 226 performs a learning process such as machine learning using the learning data stored in the storage unit 204.

Note that a method used for the learning process is not particularly limited. Furthermore, for example, learning data generated by other users may also be obtained from a server or the like and used.

In step S205, the learning section 226 of the information processing apparatus 111 updates the design data on the basis of a result of the processing in step S204. That is, the learning section 226 updates the design data stored in the storage unit 204 with design data generated or updated as a result of the processing in step S204.

Thereafter, the above-described process for controlling contact situation feedback is performed using the updated design data.

As a result, in the three-dimensional CAD using the XR system 101, a result of estimation of contact situations between components becomes closer to actual contact situations. Furthermore, reliability and effectiveness of a solution proposed by the XR system 101 improve.

For example, in a case where size and weight of components increase to some extent, assembly might become difficult in the real world even if assembly is possible in the XR space. In contrast, by updating the design data, an appropriate clearance is proposed on the basis of the size and weight of the components in a case where, for example, interference between components occurs in the XR space.

Furthermore, for example, in a case where interference occurs between components in the XR space, whether or not fitting is possible in the real world depends on materials of the components. By updating the design data, on the other hand, whether or not fitting is possible is appropriately determined, an appropriate clearance is proposed, or an appropriate substitute component is proposed on the basis of materials of components, for example, in a case where interference between the components occurs in the XR space.

### <<3. Modifications>>

Modifications of the above embodiment of the present technology will be described hereinafter.

### <Modifications Relating to Controller Device 113a>

Although an example in which the controller device 113a can be held forward or backward has been described in the above description, the controller device 113a may be held, for example, only forward, instead.

In this case, the operation portion 302a and the holding portion 302b do not necessarily have symmetrical shapes about the ring portion 301, and for example, the operation portion 302a and the holding portion 302b may have different shapes. Furthermore, the operation member 332b and the operation member 333b of the holding portion 302b may be removed.

For example, a material other than a resin, such as metal, may be used for the controller device 113a.

### <Modifications Relating to Sharing of Processing>

For example, a part of the processing by the information processing apparatus 111 may be performed by the terminal apparatus 112.

For example, the terminal apparatus 112 may perform all or part of the processing by the information processing unit 211 of the information processing apparatus 111. For example, the terminal apparatus 112 may independently present an XR space without being controlled by the information processing apparatus 111. For example, the information processing apparatus 111 and the terminal apparatus 112 may independently share and perform processing such as construction of an XR space.

### <Modifications Relating to Method for Presenting Solution>

For example, the learning section 226 of the information processing apparatus 111 may learn the user's preference for solutions on the basis of the user's selection history or the like for a plurality of solutions. The space control section 223 may then present or implement a solution on the basis of the user's preference.

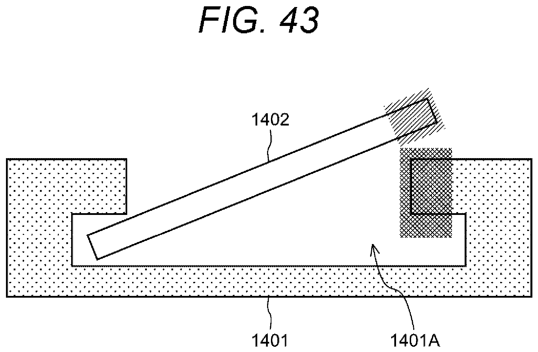

For example, as illustrated in Fig. 43, in a case where a component 1401 and a component 1402 interfere with each other and the component 1402 cannot be incorporated into a groove 1401A in the component 1401, a solution in which the component 1401 is scraped and a solution in which the component 1402 is scraped are conceivable. In this case, for example, the space control section 223 may select and present or implement one of the solutions on the basis of the user's preference for the solution.

### <Other Modifications>

For example, the controller device 113a can be used for operation of not only an XR space but also a two-dimensional space and a three-dimensional space in a game or the like.

For example, a technique for presenting contact situation feedback and a solution can also be applied to, for example, an application using XR other than the above-described three-dimensional CAD.

### <<4. Others>>

### <Configuration Example of Computer>

The above-described series of processing can be executed by hardware and can also be executed by software. In a case where the series of processing is executed by software, a program constituting the software is installed in a computer. Here, examples of the computer include a computer incorporated in dedicated hardware, and for example, a general-purpose personal computer that can execute various functions by installing various programs.

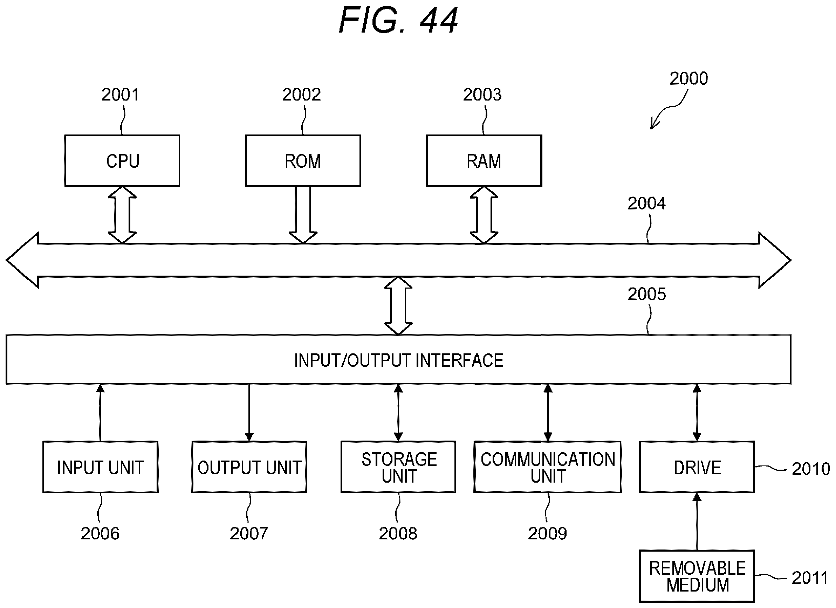

Fig. 44 is a block diagram illustrating a configuration example of hardware of a computer that executes the above-described series of processing by a program.

In a computer 2000, a central processing unit (CPU) 2001, a read only memory (ROM) 2002, and a random access memory (RAM) 2003 are mutually connected by a bus 2004.

An input/output interface 2005 is further connected to the bus 2004. An input unit 2006, an output unit 2007, a storage unit 2008, a communication unit 2009, and a drive 2010 are connected to the input/output interface 2005.

The input unit 2006 includes an input switch, a button, a microphone, an image sensor, and the like. The output unit 2007 includes a display, a speaker, and the like. The storage unit 2008 includes a hard disk, a nonvolatile memory, and the like. The communication unit 2009 includes a network interface and the like. The drive 2010 drives a removable medium 2011 such as a magnetic disk, an optical disk, a magneto-optical disk, or a semiconductor memory.

In the computer 2000 configured as described above, the series of processing described above is performed, for example, by the CPU 2001 loading a program stored in the storage unit 2008 into the RAM 2003 via the input/output interface 2005 and the bus 2004, and executing the program.

The program executed by the computer 2000 (the CPU 2001) can be provided by being recorded on, for example, the removable medium 2011 as a package medium or the like. Furthermore, the program can be provided via a wired or wireless transmission medium such as a local area network, the Internet, or digital satellite broadcasting.

In the computer 2000, the program can be installed in the storage unit 2008 via the input/output interface 2005 by mounting the removable medium 2011 on the drive 2010. Furthermore, the program can be received by the communication unit 2009 via a wired or wireless transmission medium, and be installed into the storage unit 2008. In addition, the program can be installed beforehand into the ROM 2002 or the storage unit 2008.

Note that the program executed by the computer may be a program in which processing is performed in time series in the order described in the present specification or may be a program in which processing is performed in parallel or at necessary timing such as when a call is made.

Further, in the present description, a system is intended to mean assembly of a plurality of components (devices, modules (parts), and the like), and it does not matter whether or not all the components are in the same housing. Therefore, a plurality of devices housed in separate housings and connected to each other via a network and one device in which a plurality of modules is housed in one housing are both systems.

Further, embodiments of the present technology are not limited to the embodiment described above, and various modifications can be made without departing from the scope of the present technology.

For example, the present technology may be embodied in cloud computing in which a function is shared and executed by a plurality of devices via a network.

Further, each step described in the flowchart described above can be performed by one device or can be shared and performed by a plurality of devices.

Moreover, in a case where a plurality of pieces of processing is included in one step, the plurality of pieces of processing included in the one step can be executed by one device or executed by a plurality of devices in a shared manner.

### <Combination Examples of Configurations>

The present technology can also be configured as follows.
(1) An information processing apparatus including:
   a recognition unit that recognizes a state of each of virtual objects in a Cross Reality (XR) space;
   a space control section that calculates a contact situation between the virtual objects in the XR space on the basis of the state of each virtual object and design data regarding each virtual object; and
   a presentation control unit that controls presentation of contact situation feedback representing the contact situation between the virtual objects.
(2) The information processing apparatus according to (1), in which
   the contact situation feedback includes at least one of tactile feedback representing the contact situation through tactile stimulation, visual feedback representing the contact situation through visual stimulation, or auditory feedback representing the contact situation through auditory stimulation.
(3) The information processing apparatus according to (2), in which
   the tactile feedback represents a virtual sensation of contact between the virtual objects.
(4) The information processing apparatus according to (3), in which
   the virtual sensation of contact is obtained by simulating or abstracting a real sensation of contact generated between real objects corresponding to the virtual objects.
(5) The information processing apparatus according to (4), in which
   the virtual sensation of contact is obtained by simulating or abstracting a force necessary for assembling together the real objects corresponding to the virtual objects.
(6) The information processing apparatus according to any one of (2) to (5), in which
   the presentation control unit controls presentation of the tactile feedback by an input device used to operate the XR space.
(7) The information processing apparatus according to any one of (1) to (6), in which
   the contact situation feedback indicates that one of the virtual objects has entered a clearance of another of the virtual objects.
(8) The information processing apparatus according to any one of (1) to (7), in which
   the contact situation feedback indicates a degree of matching of size between one of the virtual objects and another of the virtual objects.
(9) The information processing apparatus according to any one of (1) to (8), in which
   the contact situation feedback indicates, in a case where one of the virtual objects is assembled into another of the virtual objects, a direction in which, or a position at which, the another virtual object interferes with the virtual object or a direction in which, or a position at which, the another virtual object does not interfere with the virtual object.
(10) The information processing apparatus according to (9), in which
   the contact situation feedback includes tactile feedback representing a direction in which, or a position at which, the another virtual object interferes with the virtual object or a direction in which, or a position at which, the another virtual object does not interfere with the virtual object through tactile stimulation, namely vibration of a tactile device included in an input device used to operate the XR space.
(11) The information processing apparatus according to any one of (1) to (11), in which
   the space control section controls display of the XR space in such a way as to present or implement a solution for assembling together a plurality of the virtual objects on the basis of the state of each virtual object and the design data regarding each virtual object.
(12) The information processing apparatus according to (11), in which
   the solution includes at least one of a change in size of one of the virtual objects, a change in a shape of one of the virtual objects, a change in a material of one of the virtual objects, a change in a position of one of the virtual objects, or an amount of interference allowed between the virtual objects.
(13) The information processing apparatus according to (12), in which
   the space control section indicates at least one of a position at which, or a direction in which, one of the virtual objects can be assembled into another of the virtual objects.
(14) The information processing apparatus according to (13), further including:
   a learning unit that learns a user's preference for the solution, in which
   the space control section selects the solution to be presented or implemented on the basis of the user's preference in a case where there is a plurality of the solutions.
(15) The information processing apparatus according to any one of (1) to (14), in which
   the space control section changes, in the XR space, a user's point of view to a point of view at which visibility for a contact portion between the virtual objects improves or proposes the viewpoint at which the visibility for the contact portion improves.
(16) The information processing apparatus according to any one of (1) to (15), in which
   the space control section exposes a contact portion between the virtual objects by erasing or moving another of the virtual objects in the XR space.
(17) The information processing apparatus according to any one of (1) to (16), further including:
   a learning unit that updates the design data on the basis of data regarding a contact situation between real objects generated in a real world on the basis of the virtual objects.
(18) An information processing method including:
   recognizing a state of each of virtual objects in an XR space;
   calculating a contact situation between the virtual objects in the XR space on the basis of the state of each virtual object and design data regarding each virtual object; and
   controlling presentation of contact situation feedback representing the contact situation between the virtual objects.
(19) An input device including:
   an operation portion used to operate an XR space; and
   a tactile device that presents tactile feedback representing a contact situation between virtual objects in the XR space through tactile situation.
(20) The input device according to (19), further including:
   a ring portion into which a finger is inserted; and
   a holding portion held in a palm in a case where the operation portion is operated by the finger, in which
   the operation portion is operable by the finger inserted into the ring portion.

Note that the effects described in the present specification are merely examples and are not limited, and other effects may also be produced.

### REFERENCE SIGNS LIST

101 XR system
111 Information processing apparatus
112 Terminal apparatus
113, 113a, 113b Controller device
202 Control unit
203 Display unit
211 Information processing unit
221 Recognition section
222 Operation control section
223 Space control section
224 Audio control section
225 Tactile presentation control section
226 Learning section
252 Sensing unit
253 Control unit
254 Display unit
255 Audio output unit
301 Ring portion
301A Hole
302a Operation portion
302b Holding portion
312a, 312b Upper surface
313 Bottom surface
331 to 334 Operation member
351 Markers
371 to 372b Tactile device
401 Camera

## Claims

1. An information processing apparatus comprising:
a recognition unit that recognizes a state of each of virtual objects in a Cross Reality (XR) space;
a space control section that calculates a contact situation between the virtual objects in the XR space on a basis of the state of each virtual object and design data regarding each virtual object; and
a presentation control unit that controls presentation of contact situation feedback representing the contact situation between the virtual objects.

2. The information processing apparatus according to claim 1, wherein
the contact situation feedback includes at least one of tactile feedback representing the contact situation through tactile stimulation, visual feedback representing the contact situation through visual stimulation, or auditory feedback representing the contact situation through auditory stimulation.

3. The information processing apparatus according to claim 2, wherein
the tactile feedback represents a virtual sensation of contact between the virtual objects.

4. The information processing apparatus according to claim 3, wherein
the virtual sensation of contact is obtained by simulating or abstracting a real sensation of contact generated between real objects corresponding to the virtual objects.

5. The information processing apparatus according to claim 4, wherein
the virtual sensation of contact is obtained by simulating or abstracting a force necessary for assembling together the real objects corresponding to the virtual objects.

6. The information processing apparatus according to claim 2, wherein
the presentation control unit controls presentation of the tactile feedback by an input device used to operate the XR space.

7. The information processing apparatus according to claim 1, wherein
the contact situation feedback indicates that one of the virtual objects has entered a clearance of another of the virtual objects.

8. The information processing apparatus according to claim 1, wherein
the contact situation feedback indicates a degree of matching of size between one of the virtual objects and another of the virtual objects.

9. The information processing apparatus according to claim 1, wherein
the contact situation feedback indicates, in a case where one of the virtual objects is assembled into another of the virtual objects, a direction in which, or a position at which, the another virtual object interferes with the virtual object or a direction in which, or a position at which, the another virtual object does not interfere with the virtual object.

10. The information processing apparatus according to claim 9, wherein
the contact situation feedback includes tactile feedback representing a direction in which, or a position at which, the another virtual object interferes with the virtual object or a direction in which, or a position at which, the another virtual object does not interfere with the virtual object through tactile stimulation, namely vibration of a tactile device included in an input device used to operate the XR space.

11. The information processing apparatus according to claim 1, wherein
the space control section controls display of the XR space in such a way as to present or implement a solution for assembling together a plurality of the virtual objects on a basis of the state of each virtual object and the design data regarding each virtual object.

12. The information processing apparatus according to claim 11, wherein
the solution includes at least one of a change in size of one of the virtual objects, a change in a shape of one of the virtual objects, a change in a material of one of the virtual objects, a change in a position of one of the virtual objects, or an amount of interference allowed between the virtual objects.

13. The information processing apparatus according to claim 12, wherein
the space control section indicates at least one of a position at which, or a direction in which, one of the virtual objects can be assembled into another of the virtual objects.

14. The information processing apparatus according to claim 13, further comprising:
a learning unit that learns a user's preference for the solution, wherein
the space control section selects the solution to be presented or implemented on a basis of the user's preference in a case where there is a plurality of the solutions.

15. The information processing apparatus according to claim 1, wherein
the space control section changes, in the XR space, a user's point of view to a point of view at which visibility for a contact portion between the virtual objects improves or proposes the viewpoint at which the visibility for the contact portion improves.

16. The information processing apparatus according to claim 1, wherein
the space control section exposes a contact portion between the virtual objects by erasing or moving another of the virtual objects in the XR space.

17. The information processing apparatus according to claim 1, further comprising:
a learning unit that updates the design data on a basis of data regarding a contact situation between real objects generated in a real world on a basis of the virtual objects.

18. An information processing method comprising:
recognizing a state of each of virtual objects in an XR space;
calculating a contact situation between the virtual objects in the XR space on a basis of the state of each virtual object and design data regarding each virtual object; and
controlling presentation of contact situation feedback representing the contact situation between the virtual objects.

19. An input device comprising:
an operation portion used to operate an XR space; and
a tactile device that presents tactile feedback representing a contact situation between virtual objects in the XR space through tactile situation.

20. The input device according to claim 19, further comprising:
a ring portion into which a finger is inserted; and
a holding portion held in a palm in a case where the operation portion is operated by the finger, wherein
the operation portion is operable by the finger inserted into the ring portion.
